# EUROPÄISCHE PATENTSCHRIFT

(11) **EP 3 831 703 B1**
(45) Veröffentlichungstag und Bekanntmachung des Hinweises auf die Patenterteilung: **25.01.2023**
(21) Anmeldenummer: 21000010.5
(22) Anmeldetag: 20.02.2019
(51) Int. Cl.: B62M 9/10

(54) **HINTERRAD-RITZELANORDNUNG MIT ZWEI EINSTÜCKIGEN ZUR GEMEINSAMEN DREHUNG MITEINANDER VERBUNDENEN TEILANORDNUNGEN**
REAR WHEEL PINION ASSEMBLY WITH TWO PIECES FOR JOINT ROTATION OF PARTIAL ASSEMBLIES CONNECTED TO EACH OTHER
DISPOSITIF PIGNON DE ROUE ARRIÈRE POURVU DE DEUX DISPOSITIF PARTIELS D'UNE SEULE PIÈCE RACCORDÉS AFIN DE TOURNER ENSEMBLE

(30) Priorität: 28.02.2018 DE 102018203023; 21.12.2018 DE 102018133324
(43) Veröffentlichungstag der Anmeldung: 09.06.2021
(62) Teilanmeldung aus: 19000094.3
(73) Patentinhaber: SRAM Deutschland GmbH, 97424 Schweinfurt (DE)
(72) Erfinder: Braedt, Henrik, 97456 Dittelbrunn/OT Hambach (DE)

(56) Entgegenhaltungen:
- WO-A1-2017/040047
- US-A1- 2009 243 250

## Beschreibung

Die vorliegende Erfindung betrifft eine Fahrrad-Hinterrad-Ritzelanordnung, welche um eine Ritzeldrehachse drehbar ist. Die Ritzeldrehachse definiert eine axiale Richtung sowie orthogonal hierzu radiale Richtungen. Die Ritzeldrehachse definiert auch eine um sie umlaufende Umfangsrichtung. Die Hinterrad-Ritzelanordnung umfasst eine Mehrzahl von koaxial bezüglich der Ritzeldrehachse angeordneten, zur gemeinsamen Drehung um die Ritzeldrehachse miteinander verbundenen Ritzeln unterschiedlicher Größe und Zähneanzahl, wobei die Ritzelanordnung eine erste Teilanordnung, umfassend das größte Ritzel, und eine zweite Teilanordnung, umfassend eine Mehrzahl von einstückig miteinander ausgebildeten Ritzeln, aufweist.

Die vorliegende Erfindung betrifft weiter eine Fahrrad-Antriebsbaugruppe, welche eine Fahrradkette sowie eine mit der Fahrradkette in Antriebskraft übertragenden Formschlusseingriff bringbare Fahrrad-Hinterrad-Ritzelanordnung umfasst. Die Fahrradkette weist in an sich bekannter Weise längs ihrer Kettenlängsrichtung alternierend durch Außen- und Innenlaschenpaarungen miteinander verbundene Rollen auf. Die Hinterrad-Ritzelanordnung ist wie in der vorliegenden Anmeldung beschrieben aufgebaut.

Eine gattungsgemäße Fahrrad-Hinterrad-Ritzelanordnung, also wie im ersten Absatz beschrieben, ist aus der DE 10 2015 205 736 A1 bekannt. Aus dieser Druckschrift ist auch eine gattungsgemäße Fahrrad-Antriebsbaugruppe bekannt, wie sie im zweiten Absatz beschrieben ist.

Die aus der DE 10 2015 205 736 A1 bekannte Hinterrad-Ritzelanordnung weist eine sehr große Spreizung, also einen sehr großen Unterschied in der Zähneanzahl zwischen dem kleinsten und dem größten Ritzel auf. Dadurch bedingt sind auch die Durchmesser des kleinsten und des größten Ritzels sehr unterschiedlich. Das größte Ritzel unterliegt daher erheblichen mechanischen Belastungen, wenn die Fahrradkette mit dem größten Ritzel in Eingriff ist. Aufgrund einer Schrägstellung der mit dem größten Ritzel in Formschlusseingriff stehenden Fahrradkette relativ zu einer zur Ritzeldrehachse orthogonalen Fahrradlängsmittelebene ist das größte Ritzel durch die Fahrradkette an seinem radial außen liegenden Zahnkranz nicht nur mit Kräften in Umfangsrichtung, sondern auch mit in axialer Richtung wirkenden Kräften belastet, die aufgrund ihres Kraftangriffs am radial weit von der Ritzeldrehachse entfernten Zahnkranz eine erhebliche Biegewirkung um eine zur Ritzeldrehachse orthogonale Biegeachse bewirken können.

Die aus der DE 10 2015 205 736 A1 bekannte Ritzelanordnung weist eine erste Teilanordnung auf, welche nur das größte Ritzel umfasst, und weist eine mit dieser verbundene zweite Teilanordnung auf, welche als einstückiger Ritzeldom alle übrigen Ritzel vom zweitgrößten bis zum kleinsten Ritzel aufweist. Vom Ritzeldom axial auskragende Befestigungsstifte durchdringen Befestigungsöffnungen in Befestigungsflächen der ersten Teilanordnung, welche eigens hierfür an der ersten Teilanordnung ausgebildet sind. Die Befestigungsflächen überspannen dabei ein Paar von in Umfangsrichtung benachbarten Ritzel-Speichen der ersten Teilanordnung, um ausreichend Material für die Ausbildung der Befestigungsöffnungen bereitzustellen.

Die Befestigungsstifte sind bezüglich der Befestigungsöffnungen mit Übermaß gefertigt. Die Befestigungsstifte sind mit Presssitz in die Befestigungsöffnungen eingefügt. Durch schlagartige axiale Verformung ihres freien Längsendes in Richtung zu der sie aufweisenden zweiten Teilanordnung hin, werden die in die Befestigungsöffnungen eingefügten Längsendbereiche der Befestigungsstifte radial aufgeweitet ("verpilzt"), sodass zusätzlich zum Presssitz eine Formschlusswirkung hinzutritt, welche die zweite Teilanordnung an der ersten Teilanordnung hält. Die beiden Teilanordnungen sind somit unlösbar, d. h. nicht ohne Zerstörung von Bauteilen oder Bauteilabschnitten trennbar, miteinander verbunden.

Es hat sich jedoch herausgestellt, dass die Schwächung der Befestigungsflächen durch die darin ausgebildeten, sie in Dickenrichtung durchsetzenden Befestigungsöffnungen mit den darin aufgenommenen verpilzten Befestigungsstiften angesichts der auf die Ritzelanordnung im Betrieb wirkenden Kräfte und Momente zu Spannungsspitzen und damit zu Rissbildung oder/und ähnlicher Schadstellenbildung führen kann.

Es ist daher Aufgabe der vorliegenden Erfindung, die mechanische Festigkeit der eingangs genannten Ritzelanordnung zu erhöhen, sodass sie bei bestimmungsgemäßem Betrieb eine höhere Standfestigkeit als die bekannte Ritzelanordnung des Standes der Technik aufweist.

Anspruch 1 definiert die Erfindung und die abhängigen Ansprüche definieren bevorzugte Ausführungen.

Nicht beansprucht ist, dass eine Teilanordnung aus erster und zweiter Teilanordnung eine Mehrzahl von elastisch verformbaren Verrastungsformationen aufweist, welche mit einer Mehrzahl von Verrastungsgegenformationen der jeweils anderen Teilanordnung in Verrastungseingriff stehen, wobei der Verrastungseingriff die beiden Teilanordnungen gegen ein Entfernen voneinander in axialer Richtung sichert.

Mit dem Begriff "Verrastung" ist vorliegend ein Formschlusseingriff bezeichnet, welcher unter Ausnutzung der Material- und Bauteilelastizität der Verrastungsformationen, gegebenenfalls auch der Verrastungsgegenformationen, durch elastische Verformung der Formationenherstellbar ist. Die Verrastung ist somit von einer Verbindung der ersten und der zweiten Teilanordnung durch Verschraubung oder durch Bajonettverschluss zu unterscheiden, bei welchen keine an einem Eingriff beteiligte Formation diesen Eingriff erst durch zwischenzeitliche elastische Verformung der Formation ermöglicht.

Durch die Verrastung der beiden Teilanordnungen miteinander sind diese zur Übertragung von längs der Ritzeldrehachse wirkenden Kräften miteinander verbunden. Die während eines bestimmungsgemäßen Betriebs der Ritzelanordnung auftretenden axialen Kräfte sind durch den Kettenschräglauf verursacht, welcher umso größer ist, je mehr Ritzel die Hinterrad-Ritzelanordnung aufweist und je mehr Kettenblätter an der Tretkurbel vorgesehen sind. Die im bestimmungsgemäßen Betrieb auf eine Hinterrad-Ritzelanordnung wirkenden Axialkräfte sind nicht vernachlässigbar und sind nicht zu unterschätzen.

Die Verrastungsformationen und Verrastungsgegenformationen können ohne Schwächung eines Bauteilabschnitts, etwa durch Materialabnahme wie bei der bekannten Befestigungsöffnung, an den jeweiligen Teilanordnungen ausgebildet sein.

Durch den Verrastungseingriff zwischen erster und zweiter Teilanordnung können die erste und die zweite Teilanordnung außerdem frei von gesondert von der ersten und der zweiten Teilanordnung ausgebildeten Verbindungsmitteln, wie Schrauben, Muttern, Niete miteinander verbunden werden, was nicht nur den Montageaufwand der Ritzelanordnung verringert, sondern auch die Bauteilfestigkeit erhöht, da keine Widerlagerformationen für gesonderte Verbindungsmittel vorgesehen werden müssen.

Grundsätzlich kann daran gedacht sein, dass wenigstens eine Gruppe von Formationen aus Verrastungsformationen und Verrastungsgegenformationen an einem entsprechenden Verrastungs- oder Verrastungsgegenbauteil ausgebildet ist, welches an die erste oder/und die zweite Teilanordnung montiert ist. Bevorzugt kommt die erfindungsgemäße Ritzelanordnung aus Gründen möglichst hoher Bauteilfestigkeit mit so wenig Montagestellen und Bauteilen wie möglich aus. Deshalb ist es bevorzugt, wenn die Verrastungsformationen oder/und die Verrastungsgegenformationen einstückig mit der sie jeweils aufweisenden Teilanordnung ausgebildet sind. Bevorzugt sind beide Formationen jeweils mit der sie aufweisenden Teilanordnung einstückig ausgebildet.

Eine solche einstückige Ausbildung auch bei komplizierten Gestalten der beteiligten Teilanordnungen kann durch ein mehrstufiges Bearbeitungsverfahren erreicht werden, welches eine ur- oder/und umformende frühere Bearbeitungsphase und eine spanende spätere Bearbeitungsphase umfasst. So kann beispielsweise zunächst ein Bauteilrohling für die jeweilige Teilanordnung gegossen oder/und geschmiedet werden, bevor der so erhaltene Bauteilrohling durch spanende Bearbeitung, wie Drehen und Fräsen, seine endgültige Gestalt erhält.

Der Verrastungseingriff sollte die beiden beteiligten Bauteile: erste und zweite Teilanordnung, relativ zueinander nicht nur axial, sondern bevorzugt auch radial und in Umfangsrichtung in wenigstens einer Richtung festlegen. Dies kann in einfacher aber wirkungsvoller Weise dadurch erreicht werden, dass die Verrastungsformationen axial von der sie aufweisenden Teilanordnung abstehende Axialvorsprünge aufweisen. Die Axialvorsprünge können - je nach ihrer Orientierung und Ausgestaltung - als mechanische Anschläge in einer axialen Richtung und bevorzugt auch in einer zur Ritzeldrehachse orthogonalen Richtung dienen und so eine Relativbewegung der ersten und der zweiten Teilanordnung in axialer und bevorzugt auch in zur Ritzeldrehachse orthogonaler Richtung verhindern.

Zur axialen Fixierung der ersten und der zweiten Teilanordnung relativ zueinander kann vorgesehen sein, dass die Axialvorsprünge als Axial-Fixiervorsprünge mit axialem Abstand von einem Wurzelbereich, von welchem aus die Axialvorsprünge von der sie aufweisenden Teilanordnung abstehen, eine in Umfangsrichtung um die Ritzeldrehachse oder/und in radialer Richtung vom jeweiligen Axialvorsprung abstehende Rastnase aufweist. Die Rastnase kann dann eine entsprechende Verrastungsgegenformation hintergreifen und so eine axiale Relativbewegung der ersten und der zweiten Teilanordnung in wenigstens eine axiale Richtung begrenzen.

Bevorzugt sind die Axial-Fixiervorsprünge in einer Richtung orthogonal zur Ritzeldrehachse, also in radialer Richtung oder/und in Umfangsrichtung, verformbar, bevorzugt bezüglich ihres Wurzelbereichs, von dem sie auskragen biegbar. In axialer Richtung sind sie bevorzugt starr, um hohe Sicherungskräfte in axialer Richtung bereitstellen zu können.

Ein Axial-Fixiervorsprung kann eine axiale Relativbewegung zwischen der ersten und der zweiten Teilanordnung sogar vollständig unterbinden und damit die beiden Teilanordnungen axial relativ zueinander ausreichend eindeutig festlegen, wenn der Axial-Fixiervorsprung einen Fixierabschnitt einer Verrastungsgegenformation in einem Halteraum axial definiert hält, welcher axial in einer ersten Richtung durch die Rastnase und in einer der ersten entgegengesetzten zweiten Richtung durch eine mit axialem Abstand von dieser angeordnete, sich parallel zur Rastnase erstreckenden Halteformation begrenzt ist. Die Halteformation kann eine beliebige Formation sein. Bevorzugt ist es der ohnehin vorhandene Wurzelbereich, von welchem aus der Axial-Fixiervorsprung von der sie tragenden Teilanordnung weg axial absteht. So kann beispielsweise eine zur Rastnase hinweisende Außenfläche des Wurzelbereichs eine Anlagefläche bilden, an welcher der Fixierabschnitt der zugeordneten Verrastungsgegenformation, durch die Rastnase gegen ein Abheben gesichert, anliegt. Bevorzugt sind eine Mehrzahl von Axial-Fixiervorsprüngen, besonders bevorzugt alle Axial-Fixiervorsprünge derart ausgebildet, dass sie den oben genannten Halteraum bereitstellen.

Zur Fixierung der ersten und der zweiten Teilanordnung relativ zueinander in radialer oder/und in Umfangsrichtung kann weiterhin vorgesehen sein, dass die erste oder/und die zweite Teilanordnung Axialvorsprünge als Anschlagvorsprünge mit einer Anschlagfläche aufweist, welche in eine Wirkrichtung mit einer Verlaufskomponente orthogonal zur Ritzeldrehachse weist und an welcher je ein Anschlagabschnitt einer Anschlaggegenformation anliegt. Je nachdem, ob ein Anschlagvorsprung eine Relativbewegung der beiden Teilanordnungen in radialer oder in Umfangsrichtung verhindern soll, ist die Wirkrichtung eine radiale Richtung oder eine Umfangsrichtung. Bevorzugt weist die Wirkrichtung Verlaufskomponenten sowohl in radialer Richtung als auch in Umfangsrichtung auf, sodass ein Anschlagvorsprung eine Relativbewegung der beiden Teilanordnungen sowohl in radialer Richtung als auch in Umfangsrichtung behindern oder begrenzen kann. Grundsätzlich soll nicht ausgeschlossen sein, dass die Wirkrichtung auch eine Verlaufskomponente in axialer Richtung hat, bevorzugt sind die Verlaufskomponenten der Wirkrichtung jedoch ausschließlich orthogonal zur Ritzeldrehachse. Dadurch werden axiale Kraftwirkungen an den Anschlagvorsprüngen vermieden, welche ansonsten auf die beiden Teilanordnungen wirken würden.

Um die Teilanordnungen konstruktiv möglichst einfach zu gestalten, ist wenigstens ein Teil der Anschlagvorsprünge, sind vorzugsweise alle Anschlagvorsprünge, an derselben Teilanordnung wie die Verrastungsformationen, insbesondere die Axial-Fixiervorsprünge, ausgebildet. In diesem Fall ist die mit einem Anschlagvorsprung in Anlageeingriff stehende Anschlaggegenformation bevorzugt eine Verrastungsgegenformation. Die Wirkrichtungen von an unterschiedlichen Orten einer Teilanordnung gelegenen Anschlagvorsprüngen weisen lokal bevorzugt in unterschiedliche Richtungen, von welchen jede eine Verlaufskomponente orthogonal zur Ritzeldrehachse hat bzw. orthogonal zur Ritzeldrehachse verläuft.

Damit eine Relativbewegung der beiden Teilanordnungen nicht nur in einer radialen Richtung oder/und nicht nur in einer Umfangsrichtung verhindert werden kann, weist wenigstens eine der Teilanordnungen bevorzugt Gegenanschlagvorsprünge mit einer Gegenanschlagfläche auf, welche in eine Gegenwirkrichtung mit einer Verlaufskomponente orthogonal zur Ritzeldrehachse weist und an welcher je ein Gegenanschlagabschnitt einer Anschlaggegenformation anliegt. Dabei weisen die radialen Verlaufskomponenten oder/und die Verlaufskomponenten in Umfangsrichtung von Wirkrichtung und Gegenwirkrichtung von an ein und derselben Anschlaggegenformation anliegenden Anschlagflächen und Gegenanschlagflächen in entgegengesetzte Richtungen. Bevorzugt verläuft die Gegenwirkrichtung ohne axiale Komponente nur orthogonal zur Ritzeldrehachse. Wiederum kann die Anschlaggegenformation eine Verrastungsgegenformation sein.

Auch die Gegenanschlagvorsprünge sind bevorzugt sowohl in radialer Richtung als auch in Umfangsrichtung wirksam. Das oben zu den Anschlagvorsprüngen und ihrer Wirkrichtung Gesagte gilt mutatis mutandis auch für die Gegenanschlagvorsprünge und ihre Gegenwirkrichtung.

Mit der Festlegung der ersten und der zweiten Teilanordnung aneinander sorgen die genannten Anschlag- und Gegenanschlagvorsprünge dafür, dass sich der einmal gebildete Verrastungseingriff nicht wieder durch Relativbewegung der Teilanordnungen lösen kann. Der Verrastungseingriff ist zur Erhöhung der Betriebssicherheit der Ritzelanordnung bevorzugt ein praktisch unlösbarer Verrastungseingriff, der, beispielsweise wegen der großen Anzahl an Axial-Fixiervorsprüngen, die alle gleichzeitig verformt werden müssten, nur mit unrealistisch hohem Aufwand wieder gelöst werden kann.

Bevorzugt erfolgt das Fügen von erster und zweiter Teilanordnung unter Herstellung des oben genannten Verrastungseingriffs durch koaxiale Anordnung der beiden Teilanordnungen relativ zur gemeinsamen Ritzeldrehachse und durch Ausüben von Kraft auf die beiden Teilanordnungen in axialer Richtung, vorzugsweise nur in axialer Richtung, aufeinander zu. Dieses Fügen, bei welchem die Axial-Fixiervorsprünge aufgrund der dort vorgesehenen Rastnase elastisch verformt werden, kann dadurch erleichtert werden, dass wenigstens ein Teil der Gegenanschlagvorsprünge, vorzugsweise alle Gegenanschlagvorsprünge, an ihrem frei auskragenden Längsende eine Schrägfläche aufweisen, wobei die Gegenanschlagfläche axial zwischen der Schrägfläche und dem Wurzelbereich gelegen ist, von welchem aus die Gegenanschlagvorsprünge auskragen. Die Schrägfläche ist dabei derart geneigt, dass ein auf ihr axial in Richtung zum Wurzelbereich hin wandernder Punkt sich in radialer Richtung oder/und in Umfangsrichtung der Gegenanschlagfläche annähert. Bevorzugt sind Gegenanschlagvorsprünge an derselben Teilanordnung ausgebildet wie die Axial-Fixiervorsprünge und besonders bevorzugt auch wie die Anschlagvorsprünge.

Dann, wenn Paare von Anschlag- und Gegenanschlagvorsprüngen, wobei auch die Axial-Fixiervorsprünge Anschlagvorsprünge sein können, derart angeordnet sind, dass sie im fertig verrasteten Zustand der Teilanordnungen zwischen ihren Anschlag- und Gegenanschlagflächen eine Anschlaggegenformation, gegebenenfalls in Gestalt einer Verrastungsgegenformation, in einer Richtung orthogonal zur Ritzeldrehachse spielfrei zwischen sich halten, reicht die Ausübung von ausschließlich axialer Fügekraft auf die beiden Teilanordnungen aus, wobei die Schrägflächen während des Fügevorgangs als mechanische Zwangsführung der Verrastungsformationen und der Verrastungsgegenformationen in den Verrastungseingriff dienen. Die Verformungsarbeit der Axial-Fügevorsprünge kann durch die genannten Schrägflächen verringert werden, da beispielsweise die Verrastungsgegenformationen entlang der Schrägflächen in die oben genannten Halteräume der Axial-Fixiervorsprünge in einer Art rudimentären Schraubbewegung eingedreht werden können, wodurch sich die Axial-Fügevorsprünge weniger stark orthogonal zur Ritzeldrehachse verformen müssten, als wenn diese einfach um die Abmessung ihrer überstehenden Rastnase in radialer Richtung oder/und in Umfangsrichtung - je nach ihrer Ausgestaltung und Orientierung - beiseite gedrückt werden müssten, um den Halteraum aus rein axialer Richtung zugänglich zu machen.

Die Anzahl an für einen sicheren Verrastungseingriff benötigten Axialvorsprüngen kann dadurch vorteilhaft gering gehalten werden, dass wenigstens ein Teil der Axial-Fixiervorsprünge, vorzugsweise alle Axial-Fixiervorsprünge, auch Anschlagvorsprünge ist bzw. sind. Eine axial zwischen Rastnase und Halteformation, insbesondere Wurzelbereich, gelegene Flanke des Axial-Fixiervorsprungs ist dann Anschlagfläche oder weist eine solche Fläche zumindest auf.

Die genannten Axialvorsprünge sind vorzugsweise an einem geschlossen um die Ritzeldrehachse umlaufenden Zahnkranz eines Ritzels der sie tragenden Teilanordnung ausgebildet und stehen axial von diesem Zahnkranz ab. Die Axialvorsprünge sind in Umfangsrichtung mit Abstand voneinander angeordnet. Aufgrund der Anordnung am Zahnkranz ist der radiale Abstand zwischen unterschiedlichen Axialvorsprüngen kleiner als ihr Abstand in Umfangsrichtung voneinander.

Bevorzugt sind Axialvorsprünge als Axial-Fixiervorsprünge, als Anschlagvorsprünge und als Gegenanschlagvorsprünge ausgebildet vorgesehen, um die beiden Teilanordnungen bezüglich ihres Zylinderkoordinatensystems, umfassend eine axiale, eine radiale und eine Umfangskoordinate, in eindeutiger Lagebeziehung mit ausreichender Festigkeit gegenüber den im Betrieb auftretenden Kräften und Momenten aneinander festzulegen. Zur Sicherstellung dieser definierten Lagefestlegung können die Axialvorsprünge eine Mehrzahl von Vorsprunggruppen bilden, von welchen jede wenigstens einen Axial-Fixiervorsprung und einen Gegenanschlagvorsprung aufweist. Dies reicht aus, wenn der Axial-Fixiervorsprung auch Anschlagvorsprung ist. Wenigstens ein Teil der Vorsprunggruppen, vorzugsweise alle Vorsprunggruppen können zusätzlich einen Anschlagvorsprung aufweisen. Bevorzugt sichert bereits jede Vorsprunggruppe für sich alleine genommen die beiden Teilanordnungen relativ zueinander hinsichtlich einer Bewegung längs der axialen und wenigstens einer weiteren Zylinderkoordinate, vorzugsweise längs allen drei Zylinderkoordinaten.

Durch Vorsehen einer Mehrzahl von Vorsprunggruppen wird die erreichbare maximale Belastbarkeit des von den Vorsprunggruppen insgesamt erzielten Verrastungseingriffs erhöht, jedoch ist die Befestigung der beiden Teilanordnungen aneinander durch eine Mehrzahl von Vorsprunggruppen, von welchen jede einzelne die beiden Teilanordnungen hinsichtlich der axialen Richtung und einer weiteren Zylinderkoordinate oder sogar hinsichtlich aller drei linear unabhängigen Zylinderkoordinaten relativ zueinander festlegt, mechanisch überbestimmt. Die Auswirkungen der mechanischen Überbestimmung können jedoch durch entsprechende Elastizitäten an den Verrastungsformationen oder/und den Verrastungsgegenformationen vermindert werden, da beteiligte Formationen Spannungen aufgrund von mechanischer Überbestimmung durch elastische Verformung abbauen können. Es gilt der Grundsatz, dass ein mechanisch belastetes Bauteil entweder innere Spannungen aufweist, dann ist es nicht oder nur wenig verformt, oder Verformungen aufweist, dann weist es keine oder nur geringe innere Spannungen auf. So bleibt die Wirkung der erhöhten Festigkeit des erzielbaren Verrastungseingriffs bei abgemilderter Wirkung der mechanischen Überbestimmung. Die Anordnung ist somit insgesamt vorteilhaft.

Bevorzugt sind die Vorsprunggruppen identisch ausgebildet und längs des gesamten Umfangs der sie aufweisenden Teilanordnung verteilt, besonders bevorzugt äquidistant verteilt angeordnet. Die Verwendung einer Vielzahl von Vorsprunggruppen, etwa von mehr als drei oder vier Vorsprunggruppen, stellt im Übrigen die oben erwähnte praktische Unlösbarkeit des Verrastungseingriffs sicher. Während das Hintergreifen eines Abschnitts einer Verrastungsgegenformation durch einen einzigen Axial-Fixiervorsprung durch entsprechende Verformung desselben aufgehoben werden kann, wird das gleichzeitige Verformen mehrerer Axial-Fixiervorsprünge mit zunehmender Anzahl schwieriger bis faktisch unmöglich. Bevorzugt stehen die Rastnasen von unterschiedlichen Axial-Fixiervorsprüngen in unterschiedlichen Richtungen orthogonal zur Ritzeldrehachse vom jeweiligen Axialvorsprung ab. Dann müsste zum Lösen des Verrastungseingriffs nicht nur eine Mehrzahl von Axial-Fixiervorsprüngen verformt, sondern ein jeder Vorsprung aus dieser Mehrzahl in jeweils anderer Richtung verformt werden. Dies ist faktisch und praktisch unmöglich.

Wenngleich grundsätzlich nicht ausgeschlossen sein soll, dass auch an der ersten Teilanordnung Axialvorsprünge angeordnet sind, die an dem Verrastungseingriff beteiligt sind, sind solche Axialvorsprünge bevorzugt nur an der zweiten Teilanordnung vorgesehen.

Zur Vermeidung unnötigen Gewichts der Ritzelanordnung, das der Fahrradfahrer stets beschleunigen und wieder verzögern muss, ist bevorzugt, dass ein Ritzel aus der ersten oder/und der zweiten Teilanordnung einen Ritzelzähne aufweisenden radial äußeren Zahnkranzbereich und einen zur Übertragung von Drehmoment auf die Hinterradnabe ausgebildeten radial inneren Nabenbereich aufweist, wobei der Nabenbereich und der Zahnkranzbereich mittels einer Mehrzahl von in Umfangsrichtung mit Abstand voneinander angeordneten Ritzel-Speichen miteinander verbunden sind. Der weiter von der Ritzeldrehachse entfernt gelegene Zahnkranzbereich dient in an sich bekannter Weise der Übertragung von Kraft zwischen einer Fahrradkette und der Ritzelanordnung. Der näher bei der Ritzeldrehachse gelegene Nabenbereich dient in an sich bekannter Weise der Übertragung von Drehmoment von der Ritzelanordnung auf eine Hinterradnabe, etwa unter Zwischenanordnung eines Antreibers.

Die Verrastungsgegenformationen können in sehr effizienter Weise eine Mehrzahl der ohnehin vorhandenen Ritzel-Speichen aufweisen. In diesem Falle müssen die Verrastungsgegenformationen nicht eigens ausgebildet werden.

Da die Anordnung von Ritzel-Speichen vor allem bei den durchmessergrößeren Ritzeln eine hohe Gewichtseinsparung, verglichen mit einer massiven Bauweise des Ritzels, verspricht, sind die Ritzel-Speichen und damit die Verrastungsgegenformationen bevorzugt an der ersten Teilanordnung ausgebildet, welche das größte Ritzel der Ritzelanordnung aufweist.

Grundsätzlich können Ritzel-Speichen durchgehend vom Nabenbereich bis zum Zahnkranzbereich verlaufen. Da jedoch von der Ritzeldrehachse ausgehende Radiusstrahlen stark divergieren, nimmt die Belegung von Ritzelfläche durch Ritzel-Speichen mit zunehmendem radialem Abstand von der Ritzeldrehachse ab. Durch die Fahrradkette wird jedoch Kraft gerade im radial maximalen Abstand von der Ritzeldrehachse in das Ritzel eingeleitet. Um somit auch in radial weiter außen liegenden Bereichen ausreichend Ritzel-Speichen zur Übertragung von Kraft und einem daraus resultierenden Drehmoment zwischen dem Zahnkranzbereich und dem Nabenbereich bereitstellen zu können, umfassen gemäß einer vorteilhaften Weiterbildung der vorliegenden Erfindung die Ritzel-Speichen eine kleinere Anzahl radial weiter innen gelegener innerer Ritzel-Speichen und eine größere Anzahl radial weiter außen gelegener äußerer Ritzel-Speichen. Da die mit den Ritzel-Speichen als den Verrastungsgegenformationen zusammenwirkenden Verrastungsformationen der jeweils anderen Teilanordnung in der Regel ebenfalls in einem Zahnkranzbereich der die Verrastungsformationen aufweisenden Teilanordnung angeordnet sind, liegen die Verrastungsformationen in den meisten praktisch relevanten Fällen radial eher weiter außen als weiter innen. Daher umfassen bevorzugt die Verrastungsgegenformationen äußere Ritzel-Speichen. Vorzugsweise umfassen die Verrastungsgegenformationen nur äußere Ritzel-Speichen.

Auch die oben genannte Anschlaggegenformation ist bevorzugt eine Ritzel-Speiche, besonders bevorzugt eine äußere Ritzel-Speiche.

Um die für eine Verringerung von Spannungen aufgrund von Überbestimmung der Teilanordnungsverbindung ausreichende Elastizität bereitstellen zu können, ist der oben genannte Fixierabschnitt einer Ritzel-Speiche als Verrastungsgegenformation bevorzugt mit Abstand von beiden Längsenden der Ritzel-Speiche angeordnet. Gleiches gilt aus dem gleichen Grund für den Anschlagabschnitt oder/und den Gegenanschlagabschnitt einer Ritzel-Speiche als Anschlaggegenformation. Bevorzugt liegen der Fixierabschnitt oder/und der Anschlagabschnitt oder/und der Gegenanschlagabschnitt in einem mittleren Drittel der längs ihres, gegebenenfalls gekrümmten, Verlaufs zu messenden Längserstreckung der Ritzel-Speiche, die eine Verrastungsgegenformation oder/und eine Anschlaggegenformation bildet. Dies gilt insbesondere dann, wenn die Verrastungsgegenformation oder/und die Anschlaggegenformation durch eine äußere Ritzel-Speiche gebildet ist.

Bevorzugt weist ein radial zwischen dem Zahnkranzbereich und dem Nabenbereich gelegener Speichenbereich einen in Umfangsrichtung geschlossen umlaufenden Kopplungsringbereich auf, an welchem - bei Betrachtung von radial innen nach radial außen - die inneren Ritzel-Speichen enden und an welchem die äußeren Ritzel-Speichen beginnen. Dieser Kopplungsringbereich liegt bevorzugt in einem radialen Bereich, welcher von einem Drittel bis zwei Drittel der Radialerstreckung des gesamten von Ritzel-Speichen belegten Speichenbereichs reicht. Bevorzugt liegt der Kopplungsringbereich in einem radialen Bereich, welcher von einem Drittel bis 7/12 der Radialerstreckung des Speichenbereichs reicht.

Grundsätzlich kann eine einzelne Ritzel-Speiche als Angriffsort von Axial-Fixiervorsprüngen und Gegenanschlagvorsprüngen, gegebenenfalls auch weiteren Anschlagvorsprüngen, zur Festlegung der relativen Lage der beiden Teilanordnungen in allen Zylinderkoordinaten dienen. Eine geringere mechanische Belastung der einzelnen Ritzel-Speiche durch den Verrastungseingriff zwischen der ersten und der zweiten Teilanordnung kann jedoch dadurch erreicht werden, dass die Ritzel-Speichen eine Mehrzahl von Speichengruppen mit jeweils wenigstens zwei Ritzel-Speichen bilden. Bevorzugt ist jede Speichengruppe einer oben beschriebenen Vorsprunggruppe zugeordnet, sodass jede Speichengruppe mit einer Vorsprunggruppe zur Bildung je einer Eingriffskombination zusammenwirkt. Die Summe aller Eingriffskombinationen umfasst den oben genannten Verrastungseingriff sowie die die beiden Teilanordnungen in beiden Umfangsrichtungen zur Übertragung von Drehmoment miteinander verbindenden Anlageeingriffe.

Um in Umfangsrichtung möglichst viele Eingriffskombinationen unter Beteiligung von jeweils einer Mehrzahl von Ritzel-Speichen bilden zu können, ist bevorzugt daran gedacht, dass in Umfangsrichtung unmittelbar aufeinander folgende Ritzel-Speichen, vorzugsweise genau zwei unmittelbar aufeinander folgende Ritzel-Speichen, eine Speichengruppe bilden. Wie oben bereits begründet wurde, sind die Ritzel-Speichen bevorzugt äußere Ritzel-Speichen, weshalb bevorzugt eine gerade Anzahl äußerer Ritzel-Speichen vorgesehen ist.

Grundsätzlich kann daran gedacht sein, dass die Ritzel-Speichen, insbesondere die äußeren Ritzel-Speichen, ausschließlich radial vom Nabenbereich bzw. vom Kopplungsringbereich zum Zahnkranzbereich verlaufen. Diese Ausgestaltung ist jedoch nicht belastungsgerecht und daher nicht bevorzugt. Angesichts der an der Ritzelanordnung bei bestimmungsgemäßem Betrieb auftretenden Drehmomente um die Ritzeldrehachse zwischen Zahnkranzbereich und Nabenbereich, können Ritzel-Speichen mit kleinerem Querschnitt ausgebildet werden, wenn die Ritzel-Speichen belastungsgerecht zusätzlich zu ihrer radialen Verlaufskomponente eine Verlaufskomponente in Umfangsrichtung derart aufweisen, dass ein radial weiter innen gelegener Speichen-Abschnitt einem radial weiter außen gelegenen Speichenabschnitt derselben Ritzel-Speiche in Antriebsdrehrichtung der Ritzelanordnung vorauseilt. Besonders bevorzugt sind Ritzel-Speichen bei Betrachtung entgegen der Antriebsdrehrichtung konvex gekrümmt. Dies gilt bevorzugt sowohl für die radial inneren wie auch für die radial äußeren Ritzel-Speichen.

Ein weiterer Vorteil von wie im vorausgehenden Absatz beschrieben ausgestalteten Ritzel-Speichen, die als Verrastungsgegenformationen dienen, liegt darin, dass dann, wenn sie nicht nur in radialer Richtung, sondern auch in Umfangsrichtung verlaufen, zwischen den Verrastungsformationen und den Ritzel-Speichen als den Verrastungsgegenformationen nicht nur Kräfte in Umfangsrichtung, sondern zusätzlich auch Kräfte in radialer Richtung übertragen werden können.

Bevorzugt greifen daher die Verrastungsformationen in einem den Fixierabschnitt aufweisenden Bereich der Ritzel-Speichen an, in welchem diese bezüglich der radialen Richtung geneigt sind, vorzugsweise zwischen 35° und 60°, besonders bevorzugt zwischen 40° und 50°. Dann können zwischen den Verrastungsformationen und den Ritzel-Speichen zu etwa gleichen Teilen Kräfte bzw. Reaktionskräfte in radialer Richtung wie auch in Umfangsrichtung übertragen werden. Der genannte Angriff der Verrastungsformationen an den Ritzel-Speichen ist bevorzugt ein Anlageeingriff einer Anschlagfläche oder einer Gegenanschlagfläche an einer die Ritzel-Speichen seitlich begrenzenden Flanke sowie ein Hintergreifen der Ritzel-Speichen durch die Rastnase der Axial-Fixiervorsprünge. Aus demselben Grund ist bevorzugt ein den Anschlagabschnitt oder/und den Gegenanschlagabschnitt einer eine Anschlaggegenformation bildenden Ritzel-Speiche in einem Bereich der Ritzel-Speiche angeordnet, in welchem diese bezüglich der radialen Richtung geneigt ist, vorzugsweise zwischen 35° und 60°, besonders bevorzugt zwischen 40° und 50°.

Bevorzugt bilden also ohnehin vorhandene äußere Begrenzungsflächen der Ritzel-Speichen, insbesondere der äußeren Ritzel-Speichen, als Anlageeingriffsflächen einen Anlageeingriff mit den Anschlagflächen der Anschlagvorsprünge sowie mit den Gegenanschlagflächen der Gegenanschlagvorsprünge sowie mit den Rastnasen und gegebenenfalls den Halteformationen der Axial-Fixiervorsprünge. Die Summe der in unterschiedlichen Richtungen wirkenden Anlageeingriffe führt zu einem sicheren, weil formschlüssigen Verrastungseingriff.

Zur Erleichterung der beschriebenen Anlage- und Formschlusseingriffe, die den Verrastungseingriff zwischen den beiden Teilanordnungen bilden, weisen die Ritzel-Speichen wenigstens im Bereich des Verrastungseingriffs mit den Verrastungsformationen bei Betrachtung in einer zu ihrer jeweils lokalen Speichenlängsrichtung orthogonalen Schnittebene eine polyedrische Gestalt, besonders bevorzugt eine Speichengestalt mit Rechteckquerschnitt auf. Im Falle der bevorzugten Speichengestalt mit Rechteckquerschnitt sind zwei parallele Ränder des Rechteckquerschnitts von den beiden Stirnseiten der Ritzel-Speichen gebildet und die zwei übrigen parallelen Ränder durch die die beiden Stirnseiten verbindenden Flanken der Ritzel-Speichen.

In der aus der DE 10 2015 205 736 A1 bekannten Ritzelanordnung umfasst die erste Teilanordnung nur das größte Ritzel der Ritzelanordnung. Eine höhere Steifigkeit der Ritzelanordnung, vor allen Dingen eine höhere Biegesteifigkeit bezüglich einer Biegung um eine zur Ritzeldrehachse orthogonale Biegeachse, und insbesondere eine höhere Steifigkeit der besonders weit radial von der Ritzeldrehachse auskragenden ersten Teilanordnung kann jedoch dadurch erhalten werden, dass die erste Teilanordnung das größte und das zweitgrößte Ritzel umfasst, wobei das größte und das zweitgrößte Ritzel einstückig miteinander ausgebildet sind. Wegen dieser vorteilhaften Wirkung betrifft die vorliegende Anmeldung unabhängig von einem Verrastungseingriff zwischen der ersten und der zweiten Teilanordnung auch eine Fahrrad-Hinterrad-Ritzelanordnung, wie sie im ersten Absatz beschrieben ist, deren erste Teilanordnung das größte und das einstückig mit diesem ausgebildete zweitgrößte Ritzel umfasst. Die in der vorliegenden Anmeldung beschriebenen vorteilhaften Weiterbildungen gelten auch für diese Ritzelanordnung und können an dieser realisiert sein.

Unabhängig von der sonstigen Ausgestaltung von Zahnkranzbereich, Speichenbereich und Nabenbereich ist zur Erhöhung der Festigkeit, insbesondere Biegefestigkeit um eine zur Ritzeldrehachse orthogonale Biegeachse, die erste Teilanordnung derart ausgestaltet, dass der Nabenbereich axial näher am kleinsten Ritzel gelegen ist als der Zahnkranzbereich des größten Ritzels.

Zur weiteren Versteifung der ersten Teilanordnung kann die erste Teilanordnung in einem radialen Versteifungsbereich zwischen den Fußkreisen des größten und des zweitgrößten Ritzels eine um die Ritzeldrehachse umlaufende Axialsicke aufweisen. Die Axialsicke ist an einer Seite der ersten Teilanordnung als Vertiefung und bevorzugt an der entgegengesetzten Seite als Auswölbung ausgebildet. Bevorzugt ist die Axialsicke als axiale Vertiefung auf der zum zweitgrößten Ritzel hinweisenden Seite des Versteifungsbereichs ausgebildet ist.

Zur Erzielung möglichst einheitlicher Kraftverhältnisse an der ersten Teilanordnung, wenn die Fahrradkette mit dem größten oder dem zweitgrößten Ritzel in Eingriff ist, bei gleichzeitig geringem Gewicht der ersten Teilanordnung, ist bevorzugt vorgesehen, dass die Ritzel-Speichen nach radial außen bis zum Zahnkranz des größten Ritzels reichen, wobei die Anzahl an Ritzel-Speichen der ersten Teilanordnung in einem radialen Erstreckungsbereich zwischen Fußkreis und Kopfkreis des zweitgrößten Ritzels halb so groß ist wie die Zähneanzahl des zweitgrößten Ritzels. Wegen der überragenden Wirkung dieser Ausgestaltung hinsichtlich einer im Betrieb gleichmäßigen Belastung der ersten Teilanordnung betrifft die vorliegende Anmeldung unabhängig von einem Verrastungseingriff zwischen der ersten und der zweiten Teilanordnung auch eine Fahrrad-Hinterrad-Ritzelanordnung, wie sie im ersten Absatz beschrieben ist, deren erste Teilanordnung gemäß dem vorliegenden Absatz ausgebildet ist. Diese so gebildete Ritzelanordnung kann weitere vorteilhafte Merkmale aufweisen, wie sie in der vorliegenden Anmeldung beschrieben sind.

Dabei ist es besonders bevorzugt, dass - bei Betrachtung der ersten Teilanordnung in axialer Richtung - jede Ritzel-Speiche und jeder zweite Zahn des zweitgrößten Ritzels an derselben Umfangsposition gelegen sind. Somit ist ebenso jeder zweite Zahn, nämlich jeder Zahn, welche an einer Umfangsposition zwischen den Ritzel-Speichen gelegen ist, in besonders einfacher und vorteilhafterweise axial durch die Ritzel-Speichen hindurch zugänglich, was die Fertigung der ersten Teilanordnung erleichtert. Außerdem erfolgt dann, wenn eine Ritzel-Speiche an derselben Umfangsposition gelegen ist wie ein Zahn des zweitgrößten Ritzels, die Kraftübertragung zwischen zweitgrößtem und größtem Ritzel unmittelbar dort, wo Kraft von der Fahrradkette auf das zweitgrößte Ritzel übertragen wird. Somit kann dann, wenn das zweitgrößte Ritzel mit der Fahrradkette in Kraft übertragendem Eingriff ist, besonders einfach und sicher das von der Fahrradkette in die erste Teilanordnung eingeleitete Drehmoment über die Ritzel-Speichen in den Nabenbereich übertragen werden.

Bevorzugt weist wenigstens das zweitgrößte Ritzel, besonders bevorzugt sowohl das größte als auch das zweitgrößte Ritzel, der ersten Teilanordnung zumindest in einem Umfangsbereich in Umfangsrichtung alternierend axial dickere und axial dünnere Zähne auf. Dies vereinfacht die Zuordnung von Innenlaschenbereichen und Außenlaschenbereichen einer mit der Ritzelanordnung zusammenwirkenden Fahrradkette zu den Zähnen wenigstens des zweitgrößten Ritzels, insbesondere auch des größten Ritzels, was Kettenrissen vorzubeugen hilft. Wenigstens ein Teil der an derselben Umfangsposition wie Ritzel-Speichen gelegenen Zähne des zweitgrößten Ritzels ist bevorzugt axial dicker ausgebildet als die diesen in Umfangsrichtung unmittelbar benachbarten Zähne. Somit entsteht zwischen den axial dicker ausgebildeten Zähnen und den an gleicher Umfangsposition vorhandenen Ritzel-Speichen ein verhältnismäßig geringer Axialspalt, welcher die mit dem zweitgrößten Ritzel in Eingriff stehende Fahrradkette, vorzugsweise nur deren Außenlaschen, mit engem Spiel aufnimmt. Sind eine Ritzel-Speiche und ein Zahn an derselben Umfangsposition angeordnet, dann überlappen sich Ritzel-Speiche und Zahn bei Betrachtung in axialer Richtung. Dabei überlappt diejenige Formation aus Ritzel-Speiche und Zahn, welche in Umfangsrichtung die größere Abmessung hat, bevorzugt die jeweils andere Formation in Umfangsrichtung vollständig.

Die bevorzugte Zahngestalt eines axial dickeren Zahns kann dabei unabhängig davon, an welchem Ritzel er vorgesehen ist, bevorzugt wie folgt aussehen: die axial zum nächstkleineren Ritzel weisenden seitlichen Zahnflanken der in einem Umfangsabschnitt eines Ritzels alternierenden axial dickeren und der axial dünneren Zähne liegen auf einer gemeinsamen virtuellen Hüllfläche, die bevorzugt rotationssymmetrisch bezüglich der Ritzeldrehachse ausgebildet ist. Ausgehend von der gemeinsamen virtuellen Hüllfläche nähern sich die axial dickeren Zähne axial dem nächstgrößeren Ritzel stärker an als die axial dünneren Zähne. Dabei ist bevorzugt die in Antriebsdrehrichtung vorauseilende Zahnflanke der axial dickeren Zähne nicht gestuft, während die entgegengesetzte nachlaufende Zahnflanke auf der zum nächstgrößeren Ritzel hinweisenden Seite eine Axialstufe aufweist. Mit anderen Worten: ausgehend von einer gemeinsamen vorauseilenden Zahnflanke weist ein axial dickerer Zahn auf der zum nächstgrößeren Ritzel hinweisenden Seite eine kleinere Abmessung in Umfangsrichtung auf als auf der zum nächstkleineren Ritzel hinweisenden Seite. Bei Betrachtung eines Umfangsschnitts eines axial dickeren Zahns längs einer Mantelfläche eines zur Ritzeldrehachse koaxialen Schnittzylinders weist der axial dickere Zahn somit grob eine L-förmige Querschnittsfläche auf. Wegen der vorteilhaften Wirkung der Zähne mit L-förmiger Querschnittsfläche zur Führung einer Fahrradkette, die mit einem solche Zähne tragenden Ritzel in Formschlusseingriff betrifft die vorliegende Anmeldung unabhängig von einem Verrastungseingriff zwischen der ersten und der zweiten Teilanordnung auch eine Ritzelanordnung, wie sie im ersten Absatz dieser Anmeldung beschrieben ist, welche im Bereich vom größten bis zum zweitkleinsten Ritzel Zähne mit dem beschriebenen L-förmigen Umfangsquerschnitt aufweisen. Vorzugsweise weist eine Mehrzahl von Ritzeln mit gerader Zähneanzahl solche Zähne auf, besonders bevorzugt weist jedes Ritzel mit gerader Zähneanzahl solche Zähne auf. Eine derartige Ritzelanordnung kann wie in der vorliegenden Anmeldung beschrieben vorteilhaft weitergebildet sein.

Bevorzugt weisen alle Ritzel der Hinterrad-Ritzelanordnung mit gerader Zähneanzahl in Umfangsrichtung wenigstens über einen Umfangsbereich alternierend einen axial dünneren und einen axial dickeren Zahn auf, wie er im vorhergehenden Absatz beschrieben ist. Lediglich das kleinste Ritzel, das bevorzugt 10 Zähne aufweist, weist axial dickere Zähne auf, deren zum nächstgrößeren Ritzel hinweisende seitliche Zahnflanke auf einer gemeinsamen virtuellen Hüllfläche mit der gleichgerichteten Zahnflanke der axial dünneren Zähne des Umfangsbereichs gelegen ist, wobei sich die axial dickeren Zähne ausgehend von der gemeinsamen Hüllfläche axial weiter vom nächstgrößeren Ritzel weg erstrecken als die dazwischen angeordneten axial dünneren Zähne. Auch am kleinsten Ritzel erstrecken sich die beiden seitlichen Zahnflanken unterschiedlich weit in Umfangsrichtung, wobei die dem nächstgrößeren Ritzel nächstgelegene seitliche Zahnflanke eine größere Abmessung in Umfangsrichtung aufweist als die entgegengesetzte seitliche Zahnflanke. Abweichend von den übrigen Ritzeln mit gerader Zähneanzahl überragt am kleinsten Ritzel die zum nächstgrößeren Ritzel hinweisende seitliche Zahnflanke die vom nächstgrößeren Ritzel wegweisende seitliche Zahnflanke desselben Zahns in Umfangsrichtung sowohl mit ihrem in Antriebsdrehrichtung vorauseilenden Längsende als auch mit ihrem nachlaufenden Längsende. Damit kann am axial äußersten kleinsten Ritzel im Zahnbereich Platz zur Aufnahme von Randbereichen von Laschen, insbesondere von Au-βenlaschen, der Fahrradkette geschaffen werden. Durch diese abweichende Ausgestaltung des kleinsten Ritzels kann der Schräglauf der mit dem kleinsten Ritzel kämmenden Fahrradkette beeinflusst und eine unerwünschte Berührung der Fahrradkette mit dem nächstgrößten Ritzel vermieden werden. An wenigstens einem axial dickeren Zahn, vorzugsweise an einer Mehrzahl von axial dickeren Zähnen, besonders bevorzugt an allen axial dickeren Zähnen, erfolgt der Übergang von der in Umfangsrichtung längeren Zahnflanke zur in Umfangsrichtung kürzeren Zahnflanke an wenigstens einem Umfangs-Längsende des Zahns, vorzugsweise an beiden Umfangs-Längsenden, gestuft, vorzugsweise in einer einzigen Stufe, um durch die gestufte Ausbildung der Zahnflanke den Aufnahmebereich für eine Kettenlasche der Fahrradkette zu bilden. Wegen der vorteilhaften Wirkung zur Verminderung der Auswirkungen des Schräglaufs der Kette auf dem kleinsten Ritzel betrifft die vorliegende Anmeldung unabhängig von einem Verrastungseingriff zwischen der ersten und der zweiten Teilanordnung auch eine Ritzelanordnung, wie sie im ersten Absatz dieser Anmeldung beschrieben ist, welche ein kleinstes Ritzel aufweist, das wie im vorliegenden Absatz beschrieben ausgestaltet ist. An dieser Ritzelanordnung können einzelne oder mehrere Weiterbildungen realisiert sein, wie sie in dieser Anmeldung beschrieben sind.

Im Gegensatz zu dem oben genannten grob L-förmigen Querschnitt weisen die axial dickeren Zähne am kleinsten Ritzel in der oben genannten Umfangsschnittansicht einen grob T-förmigen Querschnitt auf.

Bevorzugt weist die zweite Teilanordnung mehr Ritzel als die erste Teilanordnung auf, besonders bevorzugt wenigstens doppelt so viele oder wenigstens dreimal oder sogar viermal so viele Ritzel wie die erste Teilanordnung. So kann die zweite Teilanordnung eine Reihe von zwischen 6 und 12 axial aufeinander folgenden Ritzeln einstückig miteinander ausgebildet aufweisen. Eine Gesamtritzelanzahl der Ritzelanordnung von etwa 7 oder 8 Ritzeln ist dabei für E-Bikes und Pedelecs anwendbar, bei welchen aufgrund der motorischen Unterstützung des Fahrradfahrers ein größerer Zähneanzahlunterschied zwischen axial unmittelbar benachbarten Ritzeln in Kauf genommen werden kann.

Bevorzugt weist die zweite Teilanordnung das drittgrößte Ritzel der Ritzelanordnung auf. Dieses ist weiter bevorzugt das größte Ritzel der zweiten Teilanordnung.

Ebenso kann die zweite Teilanordnung das kleinste Ritzel aufweisen. Besonders bevorzugt weist die Ritzelanordnung neben der ersten und der zweiten Teilanordnung keine weitere Teilanordnung oder kein weiteres einzelnes Ritzel auf, was die Montage der Ritzelanordnung wegen der geringen Bauteileanzahl erheblich erleichtert. Es soll jedoch nicht ausgeschlossen sein, dass zusätzlich zur ersten und zweiten Teilanordnung eine weitere Teilanordnung oder ein Einzelritzel an der Ritzelanordnung vorgesehen ist.

Zur Gewichtseinsparung sind die einzelnen einstückig ausgebildeten Ritzel der zweiten Teilanordnung durch Stege miteinander verbunden. Bevorzugt reichen die zwei axial unmittelbar benachbarte Ritzel verbindende Stege radial zur Ritzeldrehachse hin nicht über den Zahnkranz des kleineren der beiden Ritzel hinaus. Eine vorteilhafte Kraftübertragung zwischen axial unmittelbar benachbarten einstückig miteinander ausgebildeten Ritzeln der zweiten Teilanordnung kann dadurch erreicht werden, dass für wenigstens eine Paarung, vorzugsweise für mehrere Paarungen, besonders bevorzugt für alle Paarungen aus einem Ritzel und dem ihm benachbarten nächstkleineren Ritzel der zweiten Teilanordnung gilt, dass das Ritzel mit dem nächstkleineren Ritzel durch einstückig mit beiden Ritzeln ausgebildete Stege verbunden ist. Bevorzugt ist zur Erleichterung der Reinigung der zweiten Teilanordnung sowie zur Verringerung ihres Gewichts die Anzahl an Stegen, die ein größeres Ritzel mit einem axial unmittelbar benachbarten kleineren Ritzel einer Ritzelpaarung verbinden, kleiner als die Anzahl an Zähnen des kleineren Ritzels. Dabei ist besonders bevorzugt dann, wenn das nächstkleinere Ritzel eine gerade Zähneanzahl aufweist, die Anzahl an die beiden Ritzel verbindenden Stegen genau halb so groß ist wie die gerade Zähneanzahl des nächstkleineren Ritzels. Es gilt das oben zu der halben Anzahl von Ritzel-Speichen im Verhältnis zur Zähneanzahl des zweitgrößten Ritzels der ersten Teilanordnung Gesagte entsprechend. Die Anzahl an Stegen kann auch kleiner sein als die Hälfte der Zähneanzahl des kleineren Ritzels der Paarung. Bevorzugt weisen die Anzahl an Stegen und die Anzahl an Zähnen des kleineren Ritzels einer Paarung von axial unmittelbar benachbarten und durch die Stege verbundenen Ritzeln einen gemeinsamen ganzzahligen Teiler auf. Dies ermöglicht es, in steifigkeitserhöhender Weise einen Steg stets an derselben Umfangsposition am kleineren Ritzel der Paarung vorzusehen wie einen Zahn. Vorzugsweise gilt die genannte Bedingung für jede Paarung aus zwei unmittelbar axial benachbarten Ritzeln der zweiten Teilanordnung, vorzugsweise mit gerader Zähneanzahl, des kleineren der beiden Ritzel. Sind ein Steg und ein Zahn an derselben Umfangsposition angeordnet, dann überlappen sich Steg und Zahn bei Betrachtung in axialer Richtung. Dabei überlappt diejenige Formation aus Steg und Zahn, welche in Umfangsrichtung die größere Abmessung hat, bevorzugt die jeweils andere Formation in Umfangsrichtung vollständig.

Ebenfalls zur Gewichtseinsparung ist die erste Teilanordnung mit dem größten Ritzel und bevorzugt auch mit dem einstückig mit dem größten Ritzel ausgebildeten zweitgrößten Ritzel aus einem Werkstoff niedrigerer Dichte hergestellt, beispielsweise aus einer Aluminiumlegierungen. Die zweite Teilanordnung, welche mehr als zwei, vorzugsweise etwa zehn Ritzel einstückig ausgebildet aufweist, ist aus Festigkeitsgründen bevorzugt aus einem Werkstoff größerer Dichte und bevorzugt auch größeren Elastizitätsmoduls hergestellt, beispielsweise aus Stahl.

Mit Verweis auf die diesbezüglich oben zur ersten Teilanordnung bereits genannten Vorteile können diese Vorteile auch an der zweiten Teilanordnung erzielt werden, wenn - bei Betrachtung der zweiten Teilanordnung in axialer Richtung - für wenigstens eine Paarung, vorzugsweise für jede Paarung, aus einem Ritzel und dem ihm benachbarten nächstkleineren Ritzel, letzteres vorzugsweise mit gerader Zähneanzahl, der zweiten Teilanordnung gilt, dass jeder Steg und ein Zahn, vorzugsweise jeder zweite Zahn, des nächstkleineren Ritzel an derselben Umfangsposition gelegen sind. Dies verbessert die Kraftübertragung zwischen den einstückig ausgebildeten Ritzeln und erleichtert die Zugänglichkeit von wenigstens jedem zweiten Zahn eines geradzahligen kleineren Ritzels bei Fertigung und gegebenenfalls bei Montage. Wegen der überragenden Kraftübertragung und Zugänglichkeit von Zähnen eines Ritzels, vorzugsweise mit gerader Zähneanzahl, in einer einstückig ausgebildeten, mehrere Ritzel aufweisenden zweiten Teilanordnung betrifft die vorliegende Anmeldung unabhängig von einem Verrastungseingriff zwischen der ersten und der zweiten Teilanordnung auch eine Fahrrad-Hinterrad-Ritzelanordnung, wie sie im ersten Absatz beschrieben ist, deren zweite Teilanordnung gemäß dem vorliegenden Absatz oder/und gemäß einem der beiden vorhergehenden Absätze ausgebildet ist. Diese so gebildete Ritzelanordnung kann weitere vorteilhafte Merkmale aufweisen, wie sie in der vorliegenden Anmeldung beschrieben sind.

Eine verbesserte Kettenführung und ein vermindertes Risiko von Kettenrissen kann, wie oben bereits für die erste Teilanordnung erläutert, auch an der zweiten Teilanordnung erzielt werden, wenn für die wenigstens eine Paarung gilt, dass die an derselben Umfangsposition wie Stege gelegenen Zähne des nächstkleineren Ritzels axial dicker ausgebildet sind als die diesen in Umfangsrichtung unmittelbar benachbarten Zähne. Nicht beansprucht ist jedoch, dass auch an der Umfangsposition wenigstens eines axial dünneren Zahns ein Steg angeordnet ist. Dies kann etwa dann vorteilhaft sein, wenn das kleinere Ritzel im Umfangsbereich eines seiner dünneren Zähne durch eine seitliche Einprägung bzw. Ausnehmung, beispielsweise wegen einer als Vertiefung in der Ritzel-Stirnseite ausgebildeten Kettensteighilfe, in einer wenigstens einer seiner Stirnflächen geschwächt ist. Dann kann der Steg den Umfangsbereich des dünneren Zahns verstärken oder/und versteifen. Daher müssen die Stege einer Ritzelpaarung nicht notwendigerweise in Umfangsrichtung äquidistant angeordnet sein, wenngleich dies bevorzugt ist.

Dann, wenn die Anzahl an Zähnen des kleineren Ritzels einer Paarung ungerade ist, kann die Anzahl an Stegen gleich der Zähneanzahl des kleineren Ritzels sein. Auch hier gilt jedoch, dass die Anzahl an Stegen kleiner sein kann als die Anzahl an Zähnen, wenngleich wiederum bevorzugt ist, dass die Anzahl an Stegen einerseits und die Anzahl an Zähnen andererseits einen gemeinsamen ganzzahligen Teiler aufweisen.

Erfindungsgemäss sind Stege nur an solchen Umfangspositionen angeordnet, an denen sich auch ein Zahn des kleineren Ritzels der Paarung befindet.

Die Gestalt der axial dickeren und dünneren Zähne auch der zweiten Teilanordnung wurde oben bereits erläutert.

Zur möglichst effektiven Kraft- und Drehmomentübertragung durch die Stege der zweiten Teilanordnung sind die Stege nicht nur radial verlaufend zwischen den durch sie verbundenen axial unmittelbar benachbarten Ritzeln angeordnet. Bevorzugt weisen die Stege auch eine Verlaufskomponente in Umfangsrichtung auf, und zwar besonders bevorzugt so, dass ihr radial inneres Ende ihrem radial äußeren Ende in Antriebsdrehrichtung nachläuft.

Bevorzugt weist die Ritzelanordnung acht bis vierzehn Ritzel, bevorzugt 12 bis 14 Ritzel auf, wobei das kleinste Ritzel nicht mehr als zwölf, vorzugsweise nicht mehr als zehn, vorzugsweise genau zehn Zähne aufweist oder/und dass das größte Ritzel nicht weniger als 50, vorzugsweise nicht weniger als 52, besonders bevorzugt genau 52 Zähne aufweist. Zur möglichst umfangreichen Nutzung der oben beschriebenen vorteilhaften aufeinander abgestimmten räumlichen Anordnung von Ritzel-Speichen und Zähnen des zweitgrößten Ritzels sowie von Stegen und Zähnen an Ritzeln der zweiten Teilanordnung weist die Ritzelanordnung bevorzugt nicht mehr als zwei, besonders bevorzugt nicht mehr als ein Ritzel mit ungerader Zähneanzahl auf. Gemäß einer bevorzugten Ausführungsform weist die Ritzelanordnung vom kleinsten zum größten von zwei Ritzeln folgende Zähneanzahlen auf: 10, 12, 14, 16, 18, 21, 24, 28, 32, 38, 44, 52.

Wie bereits oben erläutert wurde, sind bevorzugt an einer Mehrzahl von Ritzeln mit gerader Zähneanzahl, vorzugsweise an allen Ritzeln mit gerader Zähneanzahl, jeweils wenigstens an einem Umfangsabschnitt, besonders bevorzugt an mehreren Umfangsabschnitten, höchst bevorzugt längs des gesamten Umfangs in Umfangsrichtung alternierend ein axial dickerer Zahn und ein axial dünnerer Zahn aufeinander folgend angeordnet.

Üblicherweise wird die hier diskutierte Ritzelanordnung mit einer strukturell üblichen Fahrradkette verwendet, welche längs ihrer Kettenlängsrichtung etwa äquidistante Rollen aufweist, die alternierend in Kettenlängsrichtung durch ein Paar von Innenlaschen und ein Paar von Außenlaschen miteinander verbunden sind. Bevorzugt weisen die axial dickeren Zähne eine derart auf die Gestalt der kooperierenden Fahrradkette abgestimmte Dicke auf, dass ihre axiale Abmessung größer ist als die lichte Weite zwischen den Innenlaschen einer Innenlaschenpaarung, so dass die axial dickeren Zähne nur in einen von Außenlaschen begrenzten Zahneintrittsraum der Fahrradkette bestimmungsgemäß vollständig eintauchen können. Somit wird die Fahrradkette dann, wenn sie mit einem Ritzel mit gerader Zähneanzahl in Eingriff ist, in Kettenlängsrichtung eindeutig bezüglich des Ritzels positioniert. Auch dies vermindert das Risiko von Kettenrissen. Aufgrund der oben genannten bevorzugten wenigstens in Umfangsbereichen realisierten alternierenden Anordnung von axial dickeren und dünneren Bereichen liegt an einer Mehrzahl von Ritzeln mit gerader Zähneanzahl, bevorzugt an allen Ritzeln mit gerader Zähneanzahl außer den beiden kleinsten Ritzeln, besonders bevorzugt an allen Ritzeln mit gerader Zähneanzahl, im Falle eines Formschlusseingriffs mit der Fahrradkette längs des Formschlussbereichs einem Steg oder/und einer Ritzel-Speiche, insbesondere äußeren Ritzel-Speiche, stets nur eine Außenlasche der Kette gegenüber.

Die lichte Weite zwischen den Außenlaschen einer Außenlaschenpaarung der Fahrradkette ist dabei größer als die lichte Weite zwischen den Innenlaschen einer Innenlaschenpaarung.

Die vorliegende Anmeldung betrifft daher auch eine Fahrrad-Antriebsbaugruppe, umfassend die oben genannte Fahrradkette und weiter umfassend eine Ritzelanordnung, wie sie in der vorliegenden Anmeldung beschrieben und weitergebildet ist.

Die genannte Fahrrad-Antriebsbaugruppe weist bevorzugt genau ein Kettenblatt an der Tretkurbel eines die Fahrrad-Antriebsbaugruppe tragenden Fahrrads auf, sodass Veränderungen eines Übertragungsverhältnisses von der Tretkurbel zur Hinterradnabe ausschließlich an der Hinterrad-Ritzelanordnung erfolgen.

Die vorliegende Erfindung wird nachfolgend anhand der beiliegenden Zeichnungen näher erläutert. Es stellt dar:
- Fig. 1: eine schematische Seitenansicht eines Fahrrads mit einer Fahrrad-Antriebsbaugruppe gemäß der vorliegenden Anmeldung,
- Fig. 2: eine perspektivische Ansicht einer erfindungsgemäßen Fahrrad-Hinterrad-Ritzelanordnung der Antriebsbaugruppe des Fahrrads von Figur 1 bei Betrachtung von schräg außen,
- Fig. 3: eine Seitenansicht der Ritzelanordnung von Figur 2 bei Betrachtung orthogonal zur Ritzeldrehachse,
- Fig. 4: eine Längsschnittansicht einer Radialhälfte der Ritzelanordnung der Figuren 2 und 3 entlang einer die Ritzeldrehachse enthaltenden Schnittebene,
- Fig. 5: eine axiale Ansicht der Ritzelanordnung der Figuren 2 bis 4 entlang der Ritzeldrehachse von außen, also in Richtung zu einer zur Ritzeldrehachse orthogonalen Längsmittelebene des Fahrrads von Figur 1 hin,
- Fig. 6: eine axiale Ansicht der Ritzelanordnung der Figuren 2 bis 5 in entgegengesetzter Blickrichtung, verglichen mit Figur 5,

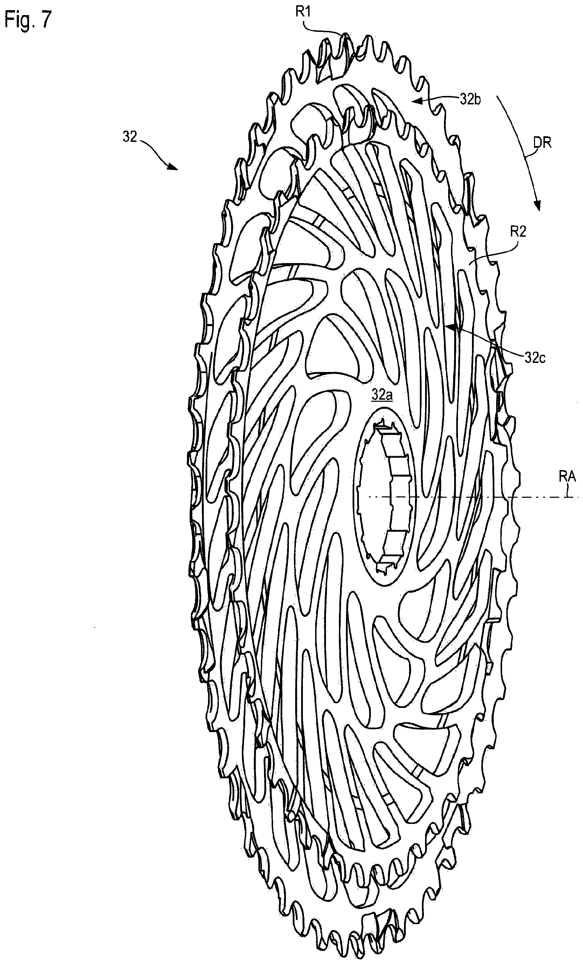

- Fig. 7: eine perspektivische Ansicht der ersten Teilanordnung der Ritzelanordnung der Figuren 2 bis 6 von schräg außen,
- Fig. 8: eine Schnittansicht der ersten Teilanordnung von Figur 7 entlang einer die Ritzeldrehachse RA enthaltenden Schnittebene,
- Fig. 9: eine axiale Ansicht der ersten Teilanordnung der Figuren 7 und 8 von außen,
- Fig. 10: eine axiale Ansicht der ersten Teilanordnung der Figuren 7 bis 9 von innen,
- Fig. 11: eine perspektivische Ansicht der zweiten Teilanordnung der Ritzelanordnung der Figuren 2 bis 6 von schräg außen,
- Fig. 12: eine Seitenansicht der zweiten Teilanordnung der Ritzelanordnung der Figuren 2 bis 6 mit Blickrichtung orthogonal zur Ritzeldrehachse,
- Fig. 13: eine axiale Ansicht der zweiten Teilanordnung der Ritzelanordnung der Figuren 2 bis 6 von innen,
- Fig. 14: eine perspektivische Ansicht der zweiten Teilanordnung von schräg innen,
- Fig. 15: einen vergrößerten Ausschnitt eines Bereichs der beiden größten Ritzel der zweiten Teilanordnung von Figur 14,
- Fig. 16: eine perspektivische Ansicht der Ritzelanordnung mit beiden Teilanordnungen von schräg hinten,
- Fig. 17: eine axiale Ansicht der vom kleinsten Ritzel der Ritzelanordnung der Figuren 2 bis 6 weg weisenden Stirnseite eines beliebigen Ritzels der Ritzelanordnung, mit Ausnahme des kleinsten Ritzels, und
- Fig. 18: eine perspektivische Ansicht des kleinsten Ritzels der Ritzelanordnung von schräg außen.

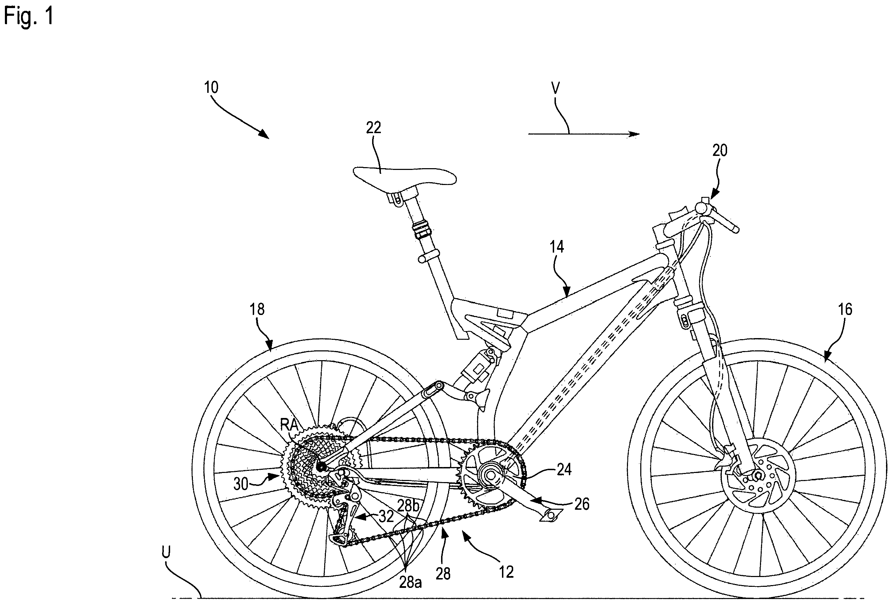

In Figur 1 ist eine schematische Seitenansicht eines Fahrrads 10 mit einer erfindungsgemäßen Fahrrad-Antriebsbaugruppe 12 gezeigt. Das Fahrrad 10 weist einen Rahmen 14 mit einem gefederten lenkbaren Vorderrad 16 und einem gefederten Hinterrad 18 auf. Das Vorderrad 16 ist mittels eines Lenkers 20 lenkbar. Auf einem Sattel 22 des Fahrrads 10 kann ein Fahrradfahrer während seiner Fahrt sitzen. Die Vorwärtsfahrtrichtung des auf einem ebenen Untergrund U aufstehend dargestellten Fahrrads 10 ist mit dem Pfeil V gekennzeichnet.

Die Fahrrad-Antriebsbaugruppe 12 umfasst im dargestellten bevorzugten Ausführungsbeispiel ein einzelnes vorderes Kettenblatt 24, welches unmittelbar mit Tretkurbeln 26 Drehmoment übertragend gekoppelt ist, und umfasst eine mit dem einzelnen vorderen Kettenblatt 24 in an sich bekannter Weise über eine Fahrradkette 28 Kraft übertragend verbundene Hinterrad-Ritzelanordnung 30. Die Hinterrad-Ritzelanordnung 30 ist Drehmoment übertragend mit dem Hinterrad 18 gekoppelt, sodass ein über die Tretkurbeln 26 in das vordere Kettenblatt 24 eingeleitetes Drehmoment über die Fahrradkette 28 und die Hinterrad-Ritzelanordnung 30 auf das Hinterrad 18 übertragen wird.

Mittels einer nicht näher beschriebenen Kettenschaltung 32 kann die Fahrradkette 28 in Kraft übertragenden Eingriff mit einem von beispielsweise zwölf Ritzeln R1 bis R12 der Hinterrad-Ritzelanordnung 30 gebracht werden. So kann der das Fahrrad 10 fahrende Fahrer in an sich bekannter Weise ein Drehzahl- und Drehmoment-Übertragungsverhältnis vom vorderen Kettenblatt 24 zum Hinterrad 18 auswählen.

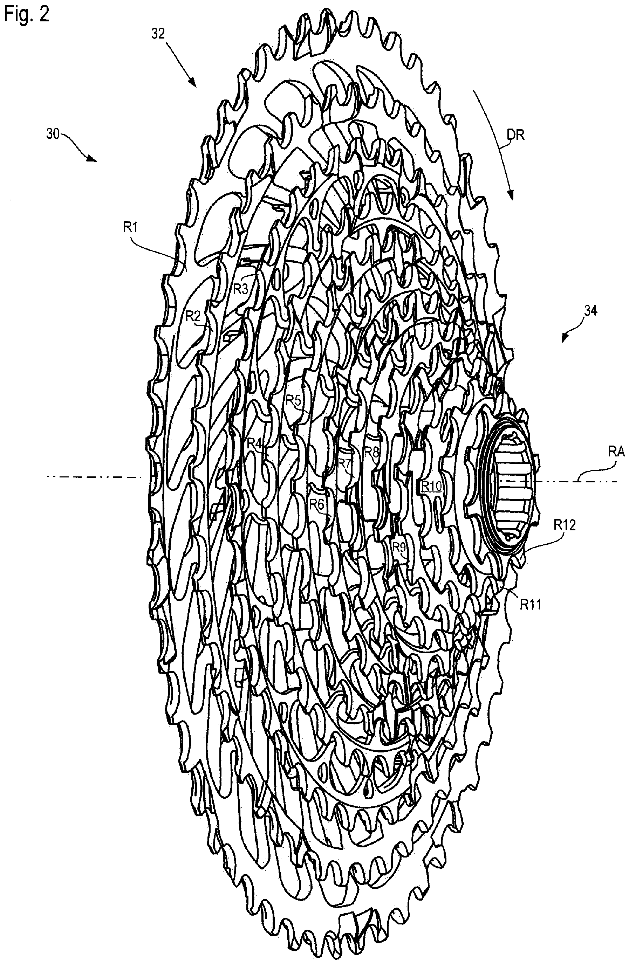

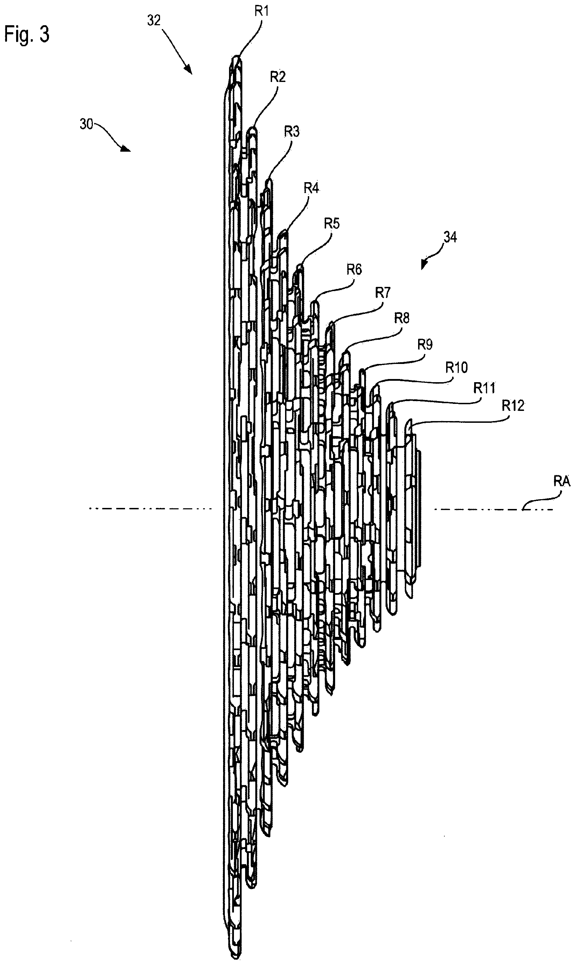

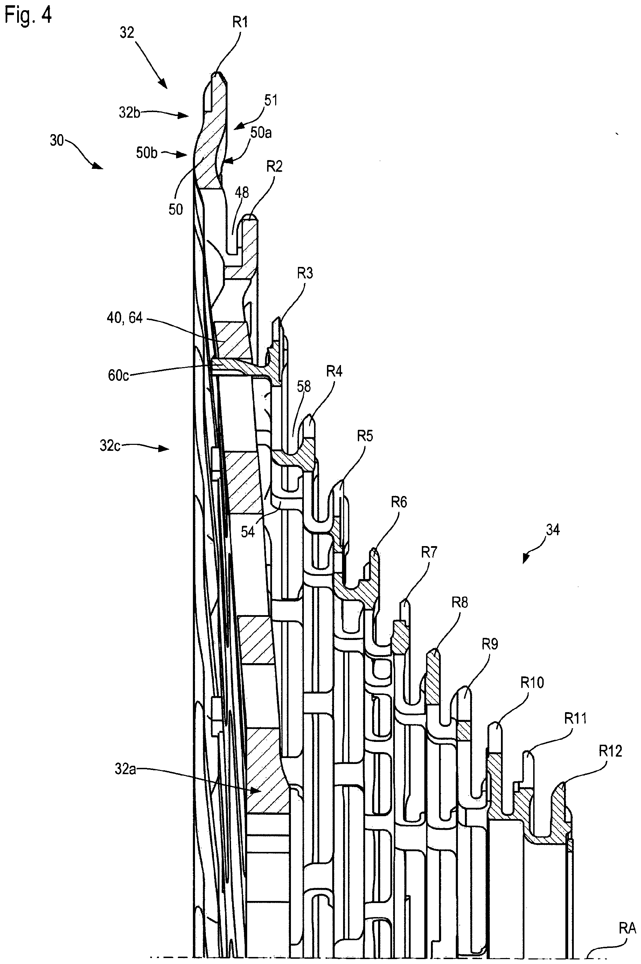

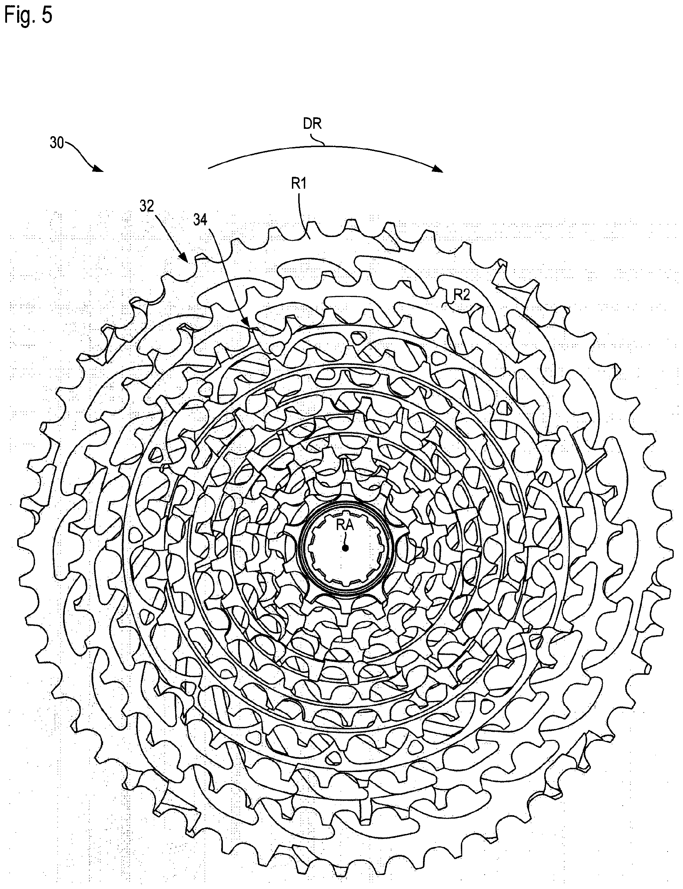

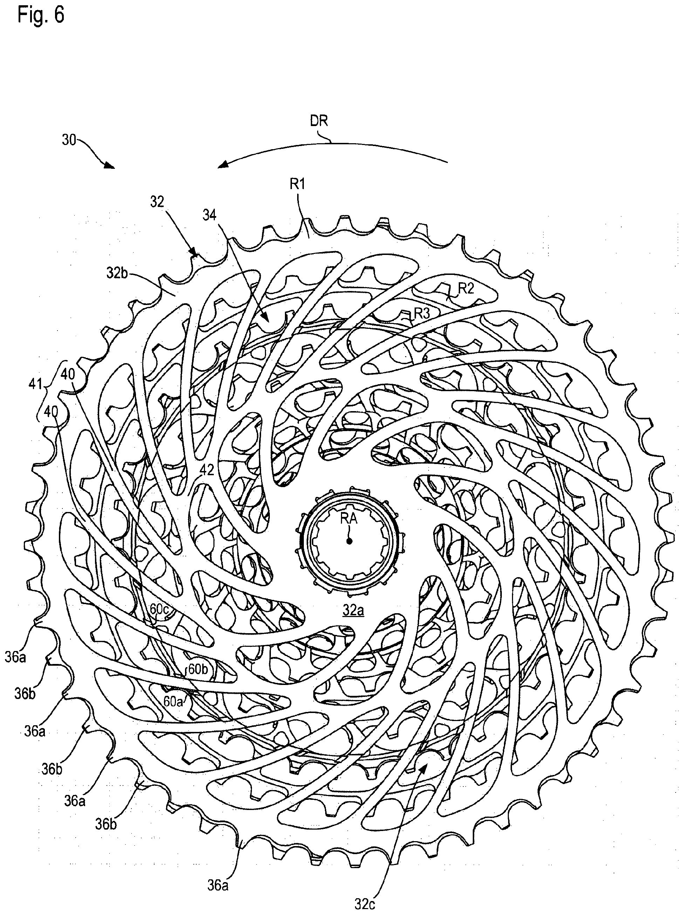

In den Figuren 2 bis 6 ist die Hinterrad-Ritzelanordnung 30 in unterschiedlichen Ansichten in Detail dargestellt. Figur 2 zeigt eine perspektivische Ansicht der Ritzelanordnung 30 von schräg vorne bzw. schräg außen, also von einer Betrachterposition, welche dem kleinsten Ritzel R12 näher gelegen ist als dem größten Ritzel R1 der Ritzelanordnung 30. Figur 3 zeigt eine Seitenansicht der Ritzelanordnung 30 mit Blickrichtung orthogonal zur Ritzelachse RA. Figur 4 zeigt eine Längsschnittansicht einer Radialhälfte der Ritzelanordnung 30 entlang einer die Ritzeldrehachse RA enthaltenden Schnittebene. Figur 5 zeigt die Ritzelanordnung 30 bei Betrachtung längs der Ritzeldrehachse RA von außen, also zu einer zur Ritzelachse RA orthogonalen Längsmittelebene des Fahrrads 10 von Figur 1 hin. Figur 6 zeigt die Ritzelanordnung 30 bei Betrachtung in axialer Richtung, jedoch in entgegengesetzte Richtung wie Figur 5, also von innen bzw. von der Längsmittelebene des Fahrrads 10 weg.

Die Ritzelanordnung 30 umfasst eine erste Teilanordnung 32, welche das größte Ritzel R1 mit vorzugsweise 52 Zähnen und das zweitgrößte Ritzel R2 mit vorzugsweise 44 Zähnen einstückig ausgebildet aufweist. Die einstückig ausgebildete erste Teilanordnung 32 ist vorzugsweise aus einer Aluminiumlegierung gebildet, um die erste Teilanordnung 32 mit möglichst geringem Gewicht auszubilden.

Die Ritzelanordnung 30 weist weiter eine mit der ersten Teilanordnung 32 fest verbundene zweite Teilanordnung 34 auf, an welcher alle weiteren Ritzel R3 bis R12 der Ritzelanordnung 30 einstückig ausgebildet sind. Das Ritzel R3 ist das drittgrößte Ritzel, das Ritzel R12 ist das zwölftgrößte bzw. kleinste Ritzel der Ritzelanordnung 30. Die einstückige zweite Teilanordnung 34 ist aus Gründen möglichst großer Festigkeit aus Stahl hergestellt. Das drittgrößte Ritzel R3 der Ritzelanordnung 30, welche das größte Ritzel der zweiten Teilanordnung 34 ist, weist vorzugsweise 38 Zähne auf. Das kleinste Ritzel R12 weist vorzugsweise 10 Zähne auf.

Die erste Teilanordnung 32 und die zweite Teilanordnung 34 sind miteinander durch Verrastung verbunden und gegen axiales Entfernen voneinander gesichert, wie weiter unten detailliert erläutert werden wird. Die zwischen der ersten und der zweiten Teilanordnung 32 bzw. 34 gebildete Verbindung verbindet die Teilanordnungen 32 und 34 zur gemeinsamen Bewegung miteinander sowohl in beide entgegengesetzten Umfangsrichtungen um die Ritzeldrehachse RA als auch in beide entgegengesetzten axialen Richtungen längs der Ritzeldrehachse RA.

Die Antriebsdrehrichtung der Ritzelanordnung 30, in welche die Ritzelanordnung 30 durch Pedalieren der Tretkurbeln 26 gedreht wird, um das Fahrrad 10 in Vorwärtsfahrtrichtung V zu bewegen, ist in den Figuren mit dem Bezugszeichen DR bezeichnet. In der axialen Ansicht von außen gemäß Figur 5 verläuft die Antriebsdrehrichtung DR im Uhrzeigersinn, in der axialen Ansicht von innen gemäß Figur 6, verläuft die Antriebsdrehrichtung DR dementsprechend im Gegenuhrzeigersinn.

Wie am besten in den Ansichten der Figuren 4 und 6 zu erkennen ist, weist die erste Teilanordnung 32 einen radial inneren Nabenbereich 32a auf, welche zur Übertragung von Drehmoment von der Ritzelanordnung 30 bzw. von der ersten Teilanordnung 32 auf einen Antreiber und damit auf eine Nabe des Hinterrads 18 ausgebildet ist. Hierzu weist der Nabenbereich 32a radial innen beispielsweise eine Keilverzahnung auf.

Außerdem weist die erste Teilanordnung 32, einen Zähne 36a und 36b des größten Ritzels R1 aufweisenden radial äußeren Zahnkranzbereich 32b auf. Wie man vor allem in Figur 4 erkennt, ist der Nabenbereich 32a gegenüber dem Zahnkranzbereich 32b axial zum kleinsten Ritzel R12 hin versetzt angeordnet, was der ersten Teilanordnung 32 eine gegenüber einer ebenen Ausbildung erhöhte Biegesteifigkeit bezüglich einer Biegung um eine zur Ritzeldrehachse RA orthogonale Biegeachse verleiht.

Die Zähne 36a des größten Ritzels R1 sind dabei zumindest in einigen Umfangsabschnitten des Ritzels R1 in axialer Richtung dicker ausgebildet als die diesen in Umfangsrichtung benachbarten Zähne 36b. Die axiale Dicke der dickeren Zähne 36a ist dabei derart gewählt, dass sie größer ist als die lichte Weite zwischen einer Innenlaschenpaarung der Kette 28. An der Fahrradkette 28 sind äquidistante Rollen in an sich bekannter Weise längs der Kettenlängsrichtung durch sich alternierend abwechselnde Außenlaschenpaarungen 28a und Innenlaschenpaarungen 28b miteinander verbunden, wobei die lichte Weite zwischen einer Innenlaschenpaarung 28b kleiner ist als zwischen einer Außenlaschenpaarung 28a. In Figur 1 ist die lichte Weite von Außenlaschenpaarungen 28a sowie von Innenlaschenpaarungen 28b parallel zur Ritzeldrehachse RA zu messen. Die Rollenachsen der durch die Innenlaschenpaarungen 28b und Außenlaschenpaarungen 28a miteinander äquidistant verbundenen Rollen der Fahrradkette 28 verlaufen in Figur 1 ebenfalls parallel zur Ritzeldrehachse RA. Die Ritzeldrehachse RA ist in Figur 1 orthogonal zur Zeichenebene der Figur 1.

Radial zwischen dem Nabenbereich 32a und dem Zahnkranzbereich 32b ist ein Speichenbereich 32c gelegen, welcher den Nabenbereich 32a mit dem Zahnkranzbereich 32b verbindet.

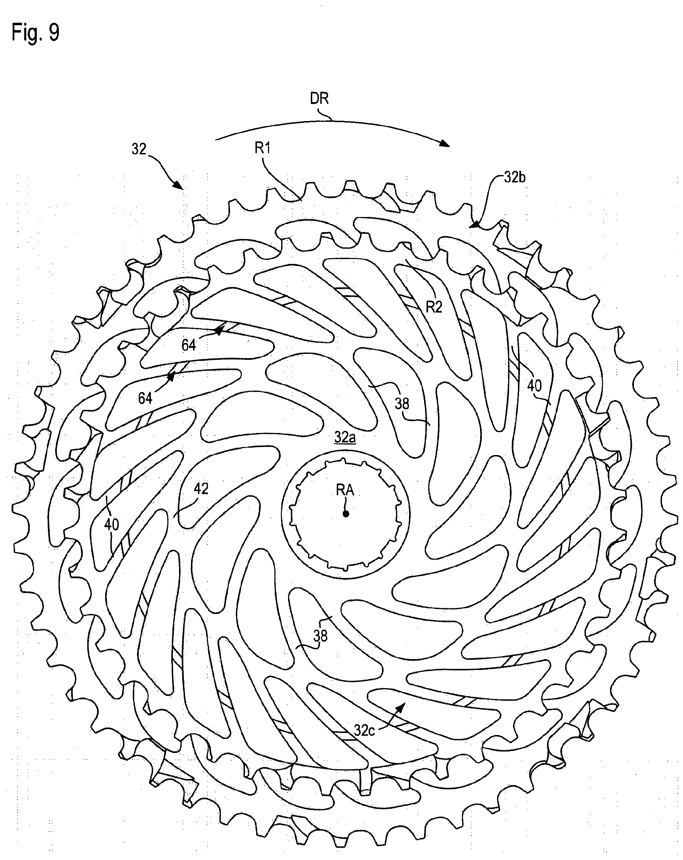

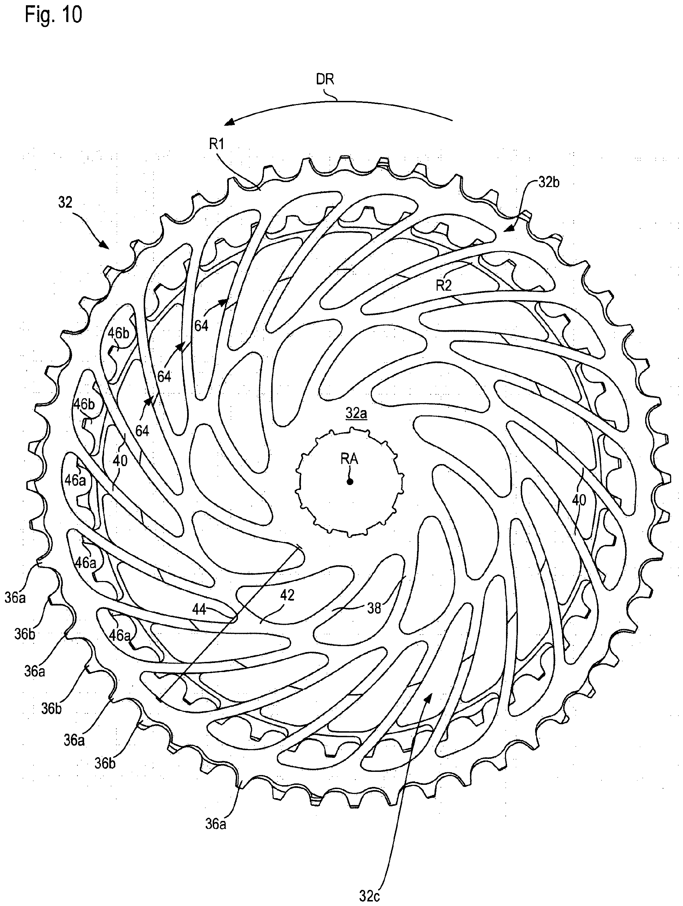

Wie gut in der axialen Innenansicht der Ritzelanordnung 30 von Figur 6, aber noch besser in den axialen Ansichten der ersten Teilanordnung 32 der Figuren 9 und 10 zu erkennen ist, umfasst der Speichenbereich 32c radial innere Ritzel-Speichen 38 und radial äußere Ritzel-Speichen 40. Die radial inneren Ritzel-Speichen 38 reichen vom Nabenbereich 32a bis zu einem geschlossen umlaufenden Kopplungsringbereich 42. Die radial äußeren Ritzel-Speichen reichen von dem Kopplungsringbereich 42 bis zum Zahnbereich 32b. Die inneren und die äußeren Ritzel-Speichen 38 bzw. 40 überlappen sich in radialer Richtung vorzugsweise nicht. Die Anzahl an äußeren Ritzel-Speichen 40 ist größer als die Anzahl an inneren Ritzel-Speichen 38, aus Gründen einer homogenen Kraftverteilung in Umfangsrichtung um die Ritzeldrehachse RA vorzugsweise um den Faktor 2.

An der dargestellten Ausführungsform der ersten Teilanordnung 32 sind in besonders vorteilhafter Weise halb so viele äußere Ritzel-Speichen 40 vorgesehen wie axial neben den äußeren Ritzel-Speichen 40 gelegene Zähne des zweitgrößten Ritzels R2.

Zur formstabilen Übertragung von Drehmoment vom Zahnkranzbereich 32b zum Nabenbereich 32a bei möglichst geringem Speichenquerschnitt sind sowohl die inneren Ritzel-Speichen 38 wie auch die äußeren Ritzel-Speichen 40 zu ihrer Versteifung derart mit einer Verlaufskomponente in Umfangsrichtung um die Ritzeldrehachse RA ausgebildet, dass das jeweilige radial innere Ende einer Ritzel-Speiche 38 bzw. 40 in Antriebsdrehrichtung DR dem radial äußeren Ende derselben Ritzel-Speiche 38 bzw. 40 vorauseilt. Außerdem sind die Ritzel-Speichen 38 und 40 um eine zur Ritzeldrehachse RA parallele Krümmungsachse derart gekrümmt ausgebildet, dass die Ritzel-Speichen 38 und 40 bei Betrachtung in Antriebsdrehrichtung DR konkav gekrümmt sind und bei Betrachtung entgegen der Antriebsdrehrichtung DR konvex gekrümmt sind.

Der Kopplungsringbereich 42 liegt bezüglich der radialen Erstreckung 44 des Speichenbereichs 32c in einem Bereich zwischen dem radial inneren Drittel der Erstreckung 44 und der Hälfte derselben (siehe Figur 10).

Wie besonders gut in Figur 10 zu erkennen ist, befindet sich jeder zweite Zahn des zweitgrößten Ritzels R2 - diese Zähne sind mit 46a bezeichnet - an der gleichen Umfangsposition wie eine äußere Ritzel-Speiche 40. Dadurch sind die zwischen den Zähnen 46a gelegenen Zähne 46b axial durch die äußeren Ritzel-Speichen 40 leicht zugänglich und können in einfacher Weise durch ein Fräswerkzeug spanend hochgenau bearbeitet werden.

Die hinsichtlich ihrer Umfangsposition mit den äußeren Ritzel-Speichen 40 übereinstimmenden Zähne 46a sind zumindest in einigen Umfangsabschnitten des zweitgrößten Ritzels R2 axial dickere Zähne als die in Umfangsrichtung benachbarten Zähne 46b. Durch diese axial dickere Ausbildung wenigstens eines Teils der Zähne 46a kann die einstückige Anbindung des zweitgrößten Ritzels R2 an das größte Ritzel R1 besonders einfach und stabil erfolgen.

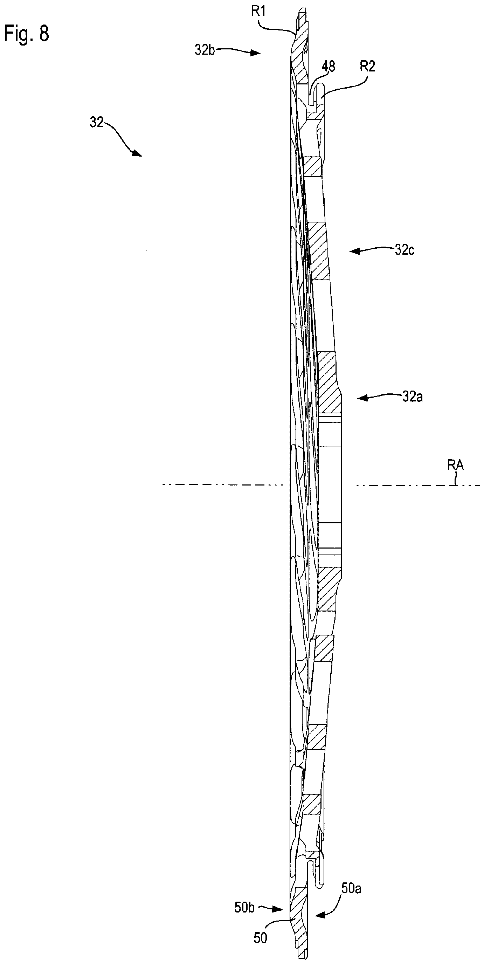

Die Schnittebene der Figuren 4 und 8 verläuft nicht durch jene Umfangsposition, an welcher sich eine äußere Ritzel-Speiche 40 und ein axial dickerer Zahn 46a des zweitgrößten Ritzels R2 axial gegenüberliegenden. Dennoch zeigen die Figuren 4 und 8, dass durch diese axiale Gegenüberstellung ein Axialspalt 48 zwischen einer äußeren Ritzel-Speiche 40 und einem Zahn 46a des Ritzels R2 eine verhältnismäßig geringe axiale Abmessung aufweist, wodurch die Fahrradkette 28 dann, wenn sie in Formschlusseingriff mit dem Ritzel R2 ist, mit geringem Axialspiel aufgenommen werden kann.

Wie insbesondere den Figuren 4 und 8 entnommen werden kann, weist der Zahnkranzbereich 32b des größten Ritzels R1 zur Versteifung dieses Ritzels R1 eine um die Ritzeldrehachse RA kreisförmig umlaufende Axialsicke 50 auf, welche von der zur zweiten Teilanordnung 34 hinweisenden Seite in das größte Ritzel R1 eingebracht wurde. Daher weist das größte Ritzel R1 auf seiner zum zweitgrößten Ritzel R2 hinweisenden Seite eine Vertiefung 50a auf. Die Axialsicke 50 ist auf der entgegengesetzten, vom zweitgrößten Ritzel R2 weg weisenden Seite als Auswölbung 50b ausgebildet. Die Axialsicke 50 befindet sich radial in einem Versteifungsbereich 51, welcher zwischen den Fußkreisen des ersten Ritzels R1 und des zweiten Ritzels R2, vorzugsweise sogar zwischen dem Kopfkreis des zweiten Ritzels R2 und dem Fußkreis des ersten Ritzels R1 gelegen ist.

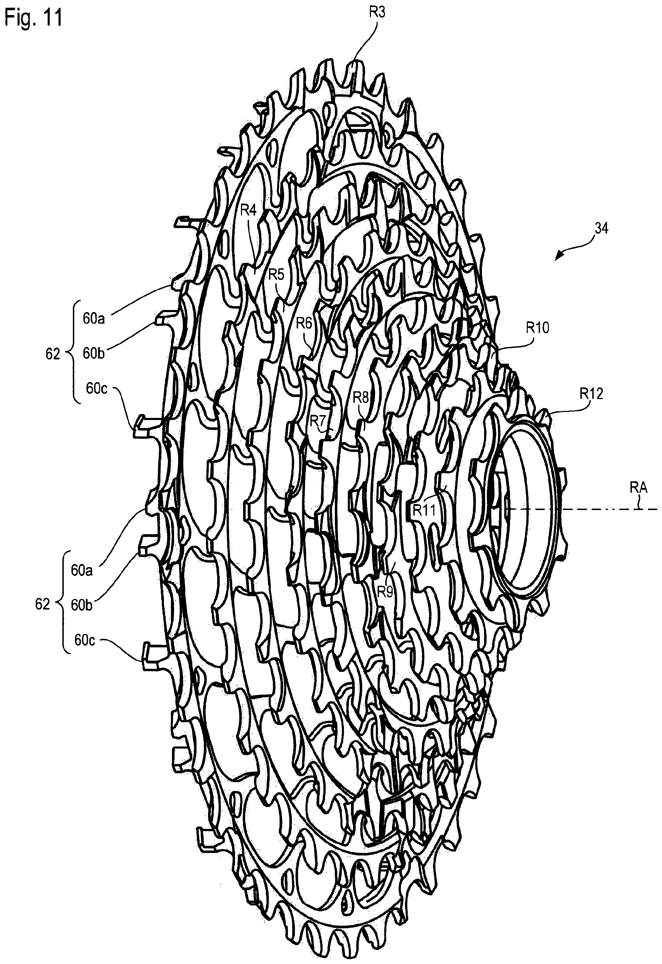

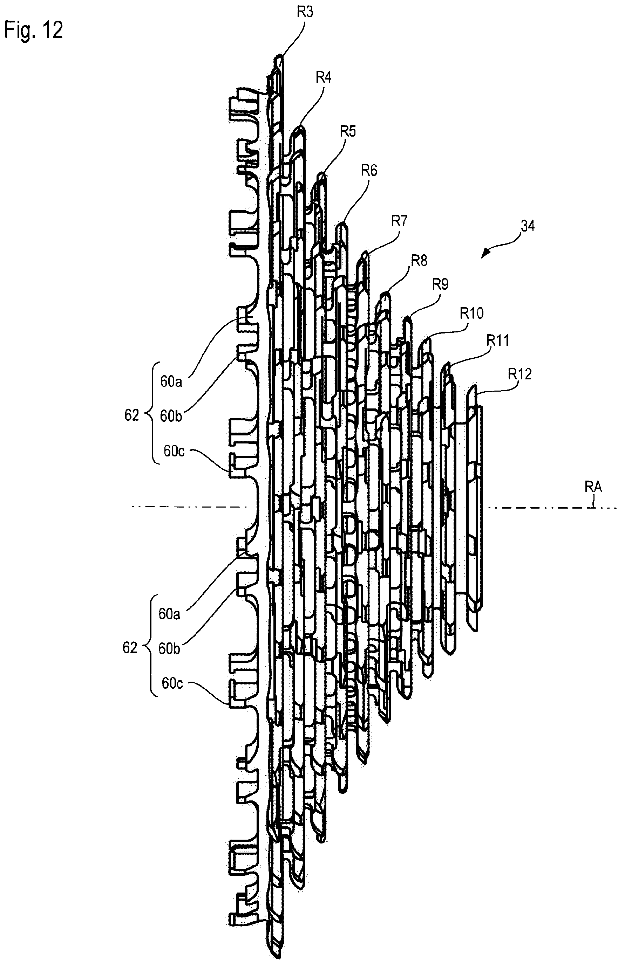

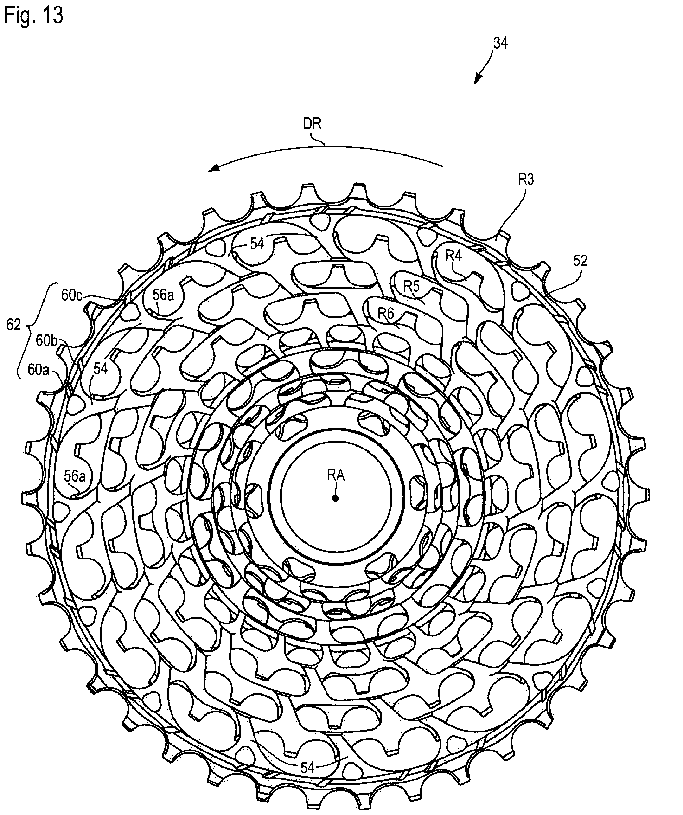

Die Figuren 11 bis 13 zeigen die zweite Teilanordnung 34 in Alleinstellung. Die Figur 11 zeigt die zweite Teilanordnung 34 dabei in perspektivischer Ansicht von schräg außen. Die Figur 12 zeigt die zweite Teilanordnung 34 in Seitenansicht orthogonal zur Ritzeldrehachse RA. Die Figur 13 zeigt die zweite Teilanordnung 34 in axialer Ansicht von innen.

Die Figur 13 zeigt die einstückige Ausbildung der zweiten Teilanordnung 34. Jedes Ritzel R3 bis wenigstens R9 weist einen die Ritzelzähne tragenden Zahnkranz und davon nach radial innen vorstehende Stege auf, welche ein Ritzel der zweiten Teilanordnung 34 mit dem axial benachbarten nächst kleineren Ritzel einstückig verbinden.

Beispielhaft sind der Übersichtlichkeit halber lediglich der Zahnkranz des größten Ritzels R3 der zweiten Teilanordnung 34 mit den Bezugszeichen 52 und die davon nach radial innen zum nächst kleineren Ritzel R4 abstehenden Stege mit Bezugszeichen 54 bezeichnet. Die Stege 54 ragen nach radial innen nicht über den Zahnkranz des jeweils nächst kleineren Ritzels, hier Ritzel R4, hinaus vor, mit welchem sie unmittelbar einstückig ausgebildet sind.

Im vorliegenden Ausführungsbeispiel ist die Zähneanzahl aller Ritzel mit Ausnahme des Ritzels R7, die 21 beträgt, gerade. Für jene Paarungen von axial unmittelbar benachbarten Ritzeln der zweiten Teilanordnung 34, deren kleineres Ritzel eine gerade Zähneanzahl aufweist, befindet sich jeder zweite Zahn des kleineren Ritzels der Paarung an der gleichen Umfangsposition wie ein Steg. Dies ist in Fig. 13 für die Ritzelpaarung R3/R4 anschaulich. Dabei ist die Anzahl an Stegen 54, die das größere Ritzel, hier R3, mit dem kleineren Ritzel, hier R4, verbindet, halb so groß wie die Zähneanzahl des kleineren Ritzels. Somit ist ebenso jeder zweite Zahn des kleineren Ritzels axial von beiden Seiten der zweiten Teilanordnung 34 zugänglich.

Eine Mehrzahl der Zähne 56a des Ritzels R4, die sich an derselben Umfangsposition wie die das Ritzel R3 und das Ritzel R4 einstückig miteinander verbindenden Stege 54 befinden, sind axial dicker ausgebildet, als die in Umfangsrichtung zwischen diesen Zähnen liegenden Zähne 56b. Wiederum kann durch die axial dickere Ausbildung der bezüglich ihrer Umfangsposition mit den Stegen 54 zusammenfallenden Zähne 56a die einstückige Verbindung der Ritzel R3 und R4 miteinander stabil ausgeführt und ein Axialspalt 58 zwischen einem Steg 54 und einem axial benachbarten Zahn 56a mit verhältnismäßig geringer Spaltweite ausgeführt werden. Der Axialspalt 58 kann dann die Fahrradkette 28 axial mit geringem Spiel aufnehmen, wenn diese in Formschlusseingriff mit dem Ritzel R4 steht.

Für die Paarung der Ritzel R6 und R7 gilt wegen der ungeraden Zähneanzahl des Ritzels R7 das oben Gesagte nicht. Dort führt an jeder Umfangsposition eines Zahns des Ritzels R7 ein Steg vom Ritzel R6 zum nächstkleineren Ritzel R7 und verbindet diese beiden einstückig miteinander. Wegen der größeren Anzahl an Stegen können die einzelnen Stege in Umfangsrichtung kürzer ausgebildet sein als die Stege jener Ritzelpaarungen, deren kleineres Ritzel eine gerade Zähneanzahl aufweist.

Wie außerdem in Figur 13 zu erkennen ist, sind die Stege (siehe beispielhaft Stege 54) zwischen den axial unmittelbar benachbarten Ritzeln zusätzlich zu ihrer Radialerstreckung in Umfangsrichtung geneigt, und zwar entgegengesetzt dem Neigungssinn der Ritzel-Speichen 38 und 40 der ersten Teilanordnung. Die axial unmittelbar benachbarten Ritzel der zweiten Teilanordnung 34 verbindenden Stege sind derart in Umfangsrichtung geneigt, dass ihr radial inneres Ende dem radial äußeren Ende in Antriebsdrehrichtung DR nachläuft. Dementsprechend eilt das radial äußere Ende dem radial inneren Ende in Antriebsdrehrichtung DR voraus. Dies ist belastungsgerecht, da die Ritzel R3 bis R12 der zweiten Teilanordnung 34 auf sie von der Fahrradkette 28 unmittelbar übertragenes Drehmoment an die erste Teilanordnung 32 übertragen, welche es an den Nabenbereich 32a und schließlich an die Hinterradnabe überträgt.

Wie die Figuren 11 bis 13 zeigen, stehen vom Zahnkranz 52 des größten Ritzels R3 der zweiten Teilanordnung 34 drei konstruktiv unterschiedliche Arten von Axialvorsprüngen 60a, 60b und 60c zur ersten Teilanordnung 32 in ab. Jeweils eine Kombination aus einem Axialvorsprung 60a, 60b und 60c bildet eine Vorsprunggruppe 62, die an einem Abschnitt 64 der äußeren Ritzel-Speichen 40 angreift. Der Abschnitt 64, der ebenso Fixierabschnitt wie Anschlagabschnitt und Gegenanschlagabschnitt ist, läuft in Umfangsrichtung vollständig um die Ritzeldrehachse RA um. Wegen seiner Eigenschaft sowohl als Fixierabschnitt als auch als Anschlagabschnitt als auch als Gegenanschlagabschnitt ist der Abschnitt 64 nachfolgend als "Angriffsabschnitt" bezeichnet. Lediglich aus Gründen der Übersichtlichkeit sind in den Figuren nur an manchen äußeren Ritzel-Speichen 40 Bezugszeichen 64 zur Kennzeichnung des Angriffsabschnitts der Vorsprunggruppen 62 an der ersten Teilanordnung 32 angeordnet.

Die Vorsprunggruppen 62 sind in Umfangsrichtung um die Ritzeldrehachse RA über den gesamten Umfang des Zahnkranzes 52 verteilt, sodass der Zahnkranz 52 und mit diesem die zweite Teilanordnung 54 über den gesamten Umfang des Zahnkranzes 52 gleichmäßig mit der ersten Teilanordnung 32 verbunden sind.

In Figur 6 ist zu erkennen, wie die Axialvorsprünge 60a, 60b und 60c mit den äußeren Ritzel-Speichen 40 der ersten Teilanordnung 32 zusammenwirken, um die erste und die zweite Teilanordnung 32 bzw. 34 drehfest und axial unbeweglich miteinander zu verbinden. Die Axialvorsprünge 60a, 60b und 60c wiederholen sich in Umfangsrichtung periodisch.

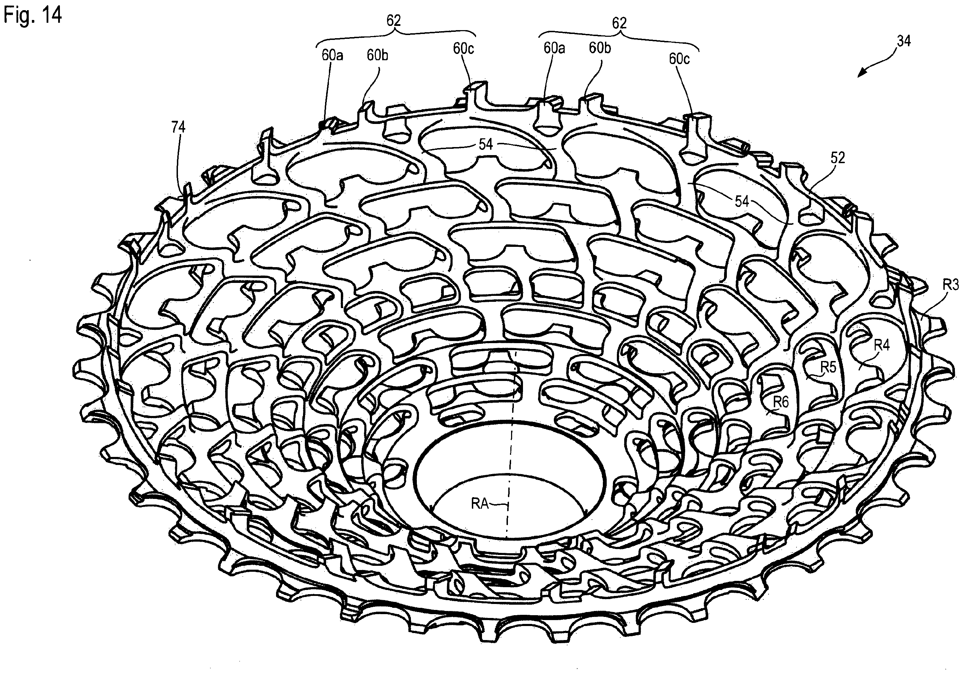

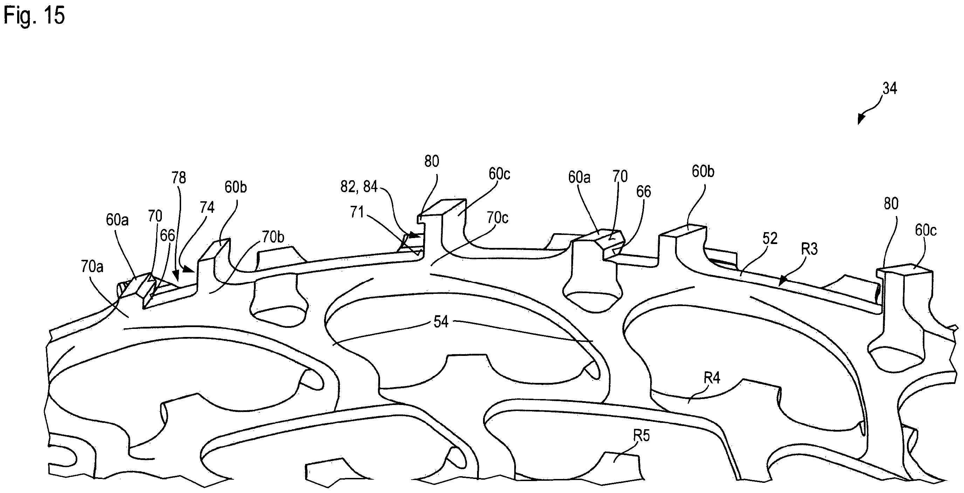

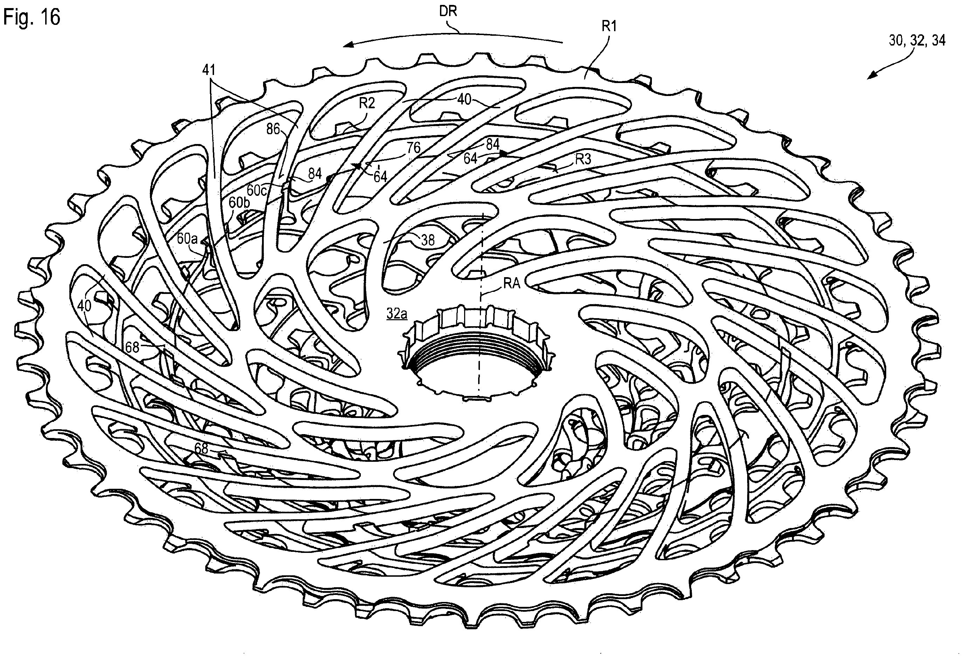

Die Verrastungsverbindung zwischen in Teilanordnungen 32 und 34 wird nachfolgend anhand der Figuren 14 bis 16 erläutert. Die 14 zeigt eine perspektivische Ansicht der zweiten Teilanordnung 34 von schräg innen. Figur 15 zeigt einen vergrößerten Ausschnitt eines Bereichs der beiden größten Ritzel R3 und R4 der zweiten Teilanordnung 34 von Figur 14. Figur 16 zeigt eine perspektivische Ansicht der Ritzelanordnung 30 mit beiden Teilanordnungen 32 und 34 von schräg innen.

Der Axialvorsprung 60a ist axial kürzer ausgebildet als die beiden anderen Arten von Axialvorsprüngen 60b und 60c. Der Axialvorsprung 60a ist ein Gegenanschlagvorsprung, welcher mit seiner Gegenanschlagfläche 66 an einer seitlichen Begrenzungsfläche 68 einer äußeren Ritzel-Speiche 40 im Angriffsabschnitt 64 (in seiner Funktion als Gegenanschlagabschnitt) anliegt.

Im Angriffsabschnitt 64 ist die seitliche Begrenzungsfläche 68, an welcher Gegenanschlagfläche 66 anliegt, bezüglich einer die Ritzeldrehachse RA enthaltenden Bezugsebene um etwa 45° geneigt, sodass durch den Anlageeingriff zwischen der Gegenanschlagfläche 66 und der seitlichen Begrenzungsfläche 68 sowohl in Umfangsrichtung als auch in radialer Richtung wirkende Kräfte zwischen den beteiligten Bauteilabschnitten 40 und 60a übertragen werden können.

Der Axialvorsprung 60a weist außerdem eine Schrägfläche 70 auf, welche derart geneigt ist, dass ein auf ihr wandernder, sich axial dem Wurzelbereich 70a des Axialvorsprung 60a am Zahnkranz 52 annähernder Punkt sich sowohl in radialer Richtung als auch in Umfangsrichtung der Gegenanschlagfläche 66 annähert.

Der Axialvorsprung 60b ist ein Anschlagvorsprung, dessen in entgegengesetzte Richtung wie die Gegenanschlagfläche 66 eines Gegenanschlagvorsprungs 60a derselben Vorsprunggruppe 62 weisende Anschlagfläche 74 ausschließlich einem Anlageeingriff mit einer seitlichen Begrenzungsfläche 76 einer äußeren Ritzel-Speiche 40 im Angriffsabschnitt 64 (nun in seiner Funktion als Anschlagabschnitt) dient. Die Begrenzungsfläche 76 ist dabei der Begrenzungsfläche 68 entgegengesetzt. Auch die Begrenzungsfläche 76 ist daher bezüglich der oben genannten Bezugsebene um 45° geneigt. Somit kann auch im Anlageeingriff zwischen der Anschlagfläche 74 und der Begrenzungsfläche 76 sowohl Kraft in radialer Richtung als auch Kraft in Umfangsrichtung zwischen dem Axialvorsprung 60b und der äußeren Ritzel-Speiche 40 übertragen werden.

Die beiden Flächen: Anschlagfläche 74 und Gegenanschlagfläche 66 begrenzen einen Aufnahmeraum 78, in welchem eine äußere Ritzel-Speiche 40 aufgenommen wird. Der Abstand der Gegenanschlagfläche 66 und der Anschlagfläche 74 derselben Vorsprunggruppe 62 entspricht im Wesentlichen der Dicke der äußeren Ritzel-Speiche 40, sodass diese in einer Richtung orthogonal zur Ritzeldrehachse im Wesentlichen spielfrei im Aufnahmeraum 78 angeordnet werden kann. Die Schrägfläche 70 erleichtert dabei das Einführen der zugeordneten äußeren Ritzel-Speiche 40 in den Aufnahmeraum 78.

Die Gesamtheit der Gegenanschlagvorsprünge 60a und der Anschlagvorsprünge 60b der zweiten Teilanordnung 34 legt somit die beiden Teilanordnungen 32 und 34 relativ zueinander in radialer Richtung wie auch in Umfangsrichtung fest.

Der Axialvorsprung 60c ist ein Axial-Fixiervorsprung. Er weist eine Rastnase 80 auf, welche von dem Axialvorsprung 60c sowohl in Umfangsrichtung wie auch in radialer Richtung bezogen auf die Ritzeldrehachse RA absteht.

Zwischen der Rastnase 80 und dem Wurzelbereich 70c, genauer einer zur Rastnase 80 hinweisenden Außenfläche 71 des Wurzelbereichs 70c, von welchem ausgehend der Axialvorsprung 60c von dem Zahnkranz 52 axial absteht, ist ein Halteraum 82 gebildet, dessen durch die Rastnase 80 und den Wurzelbereich 70c definierte Abmessung in axialer Richtung im Wesentlichen der axialen Dicke einer äußeren Ritzel-Speiche 40 im Bereich 64 entspricht, sodass der Angriffsabschnitt 64 (nun in seiner Funktion als Fixierabschnitt) der äußeren Ritzel-Speiche 40 möglichst axial spielfrei in dem Halteraum 82 aufgenommenen sein kann.

Die Gesamtheit aller Axialvorsprünge 60c legt die beiden Teilanordnungen 32 und 34 relativ zueinander axial unbeweglich aneinander fest. Die Schrägflächen 66 der Gegenanschlagvorsprünge 60a erleichtern auch das Einführen des Angriffsabschnitts 64 einer äußeren Ritzel-Speiche 40 in die jeweiligen Halteräume 82 der Axial-Fixiervorsprünge 60c.

Der Axialvorsprung 60c ist zusätzlich auch Anschlagvorsprung, denn er weist eine Anschlagfläche 84 auf, welche zwischen der Rastnase 82 und dem Wurzelbereich 70c bzw. seiner Außenfläche 71, eines Anschlagvorsprung 60c gelegen ist. Diese Anschlagfläche 84 ist zur Anlage an einer seitlichen Begrenzungsfläche 86 einer äußeren Ritzel-Speiche 40 ausgebildet. Die Rastnase 82 ist dagegen zum Anlageeingriff an eine stirnseitige Begrenzungsfläche 86 einer äußeren Ritzel-Speiche 40 ausgebildet.

Die Axialvorsprünge 60c bilden somit Verrastungsformationen der zweiten Teilanordnung 34, welche mit Verrastungsgegenformationen in Gestalt der äußeren Ritzel-Speichen 40 im Angriffsabschnitt 64 zur Bildung eines praktisch unlösbaren Verrastungseingriffs zusammenwirken.

Ein und dieselbe Vorsprunggruppe 62 wirkt dabei mit einer aus zwei in Umfangsrichtung unmittelbar benachbarten äußeren Ritzel-Speichen 40 gebildeten Speichengruppe 41 zusammen, um die auf eine einzelne Ritzel-Speiche 40 ausgeübte Kraft zu reduzieren bzw. zu beschränken.

Um im Bereich des Angriffsabschnitts 64 ausreichend elastische Verformbarkeit zur eigentlich mechanisch überbestimmten Verbindung von erster und zweiter Teilanordnung 32 bzw. 43 bereitstellen zu können, liegt der Angriffsabschnitt 64 an jeder äu-ßeren Ritzel-Speiche 40 mit Abstand von ihren beiden Längsenden in einem die Längsmitte der Ritzel-Speiche 40 enthaltenden zentralen Bereich der äußeren Ritzel-Speiche 40. Die Länge dieses zentralen Bereichs beträgt nicht mehr als ein Drittel, bevorzugt nicht mehr als ein Viertel der Gesamtlänge der Ritzel-Speiche 40.

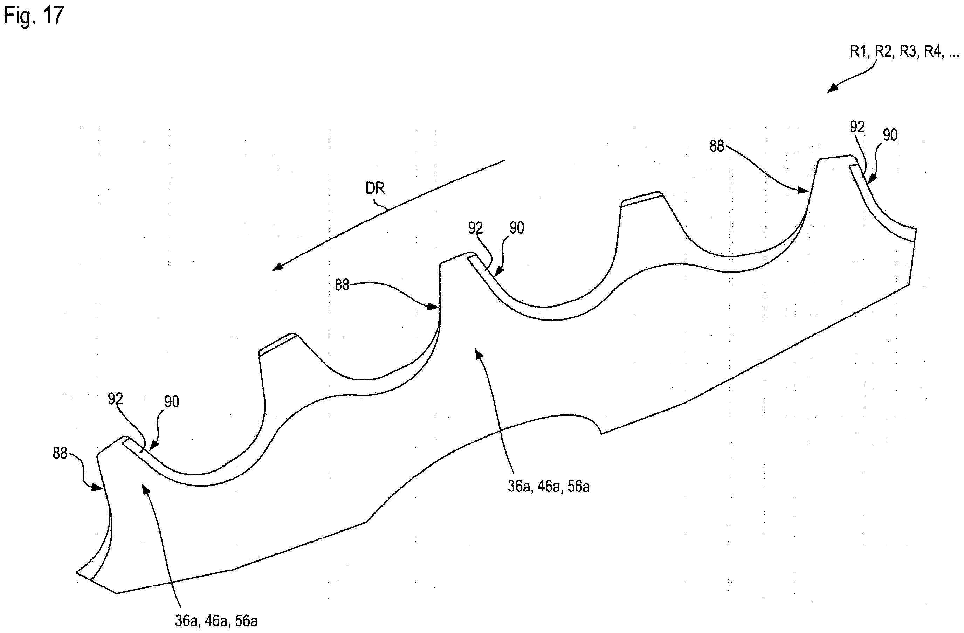

Die axial dickeren Zähne der Ritzel R1 bis R6 und R8 bis R11, von welchen zuvor beispielhaft die Zähne 36a, 46a und 56a erwähnt wurden, werden nachfolgend hinsichtlich ihrer Gestalt anhand der Figur 17 näher erläutert.

Die Figur 17 zeigt die zur oben genannten Längsmittelebene des Fahrrads 10 weisende Stirnseite eines beliebigen Ritzels R1 bis R6 und R8 bis R11. Sofern das in Figur 17 ausschnittsweise gezeigte Ritzel nicht das größte Ritzel R1 ist, blickt man auf die zum jeweils nächst größeren Ritzel weisende Stirnseite.

Der an diesen Ritzeln ausgebildete axial dickere Zahn mit den Bezugszeichen 36a, 46a oder 56a hat ausgehend von einer gemeinsamen in Antriebsdrehrichtung DR vorauseilenden Zahnflanke 88 zunächst bei konstanter Radialkoordinate in Umfangsrichtung in etwa eine konstante axiale Dicke. Die zum Betrachter die Figur 17 hinweisende seitliche Zahnflanke ist jedoch in Umfangsrichtung kürzer als die vom Betrachter der Figur 17 wegweisende, entgegengesetzte seitliche Zahnflanke. Im Bereich der in Antriebsdrehrichtung DR nachlaufenden Zahnflanke 90 ist auf der dem Betrachter zugewandten seitlichen Zahnflanke ein Axialsprung 92 ausgebildet, in welchem sich die axiale Dicke des dargestellten Zahns sprunghaft verringert. Der Axialsprung 92 verläuft vom Betrachter der Figur 17 weg.

Somit ist die Abmessung in Umfangsrichtung des axial dickeren Zahns 36a, 46a oder 56a ausgehend von der gemeinsamen vorauseilenden Zahnflanke 88 auf der dem Betrachter von Figur 17 zugewandten Seite kürzer als auf der entgegengesetzten abgewandten Seite. Der axial dickere Zahn weist somit einen grob L-förmigen Umfangsquerschnitt auf.

Der Axialsprung 92 kann Teil einer Ausnehmung sein, welche der räumlichen Aufnahme einer Außenlasche der Fahrradkette 28 dient.

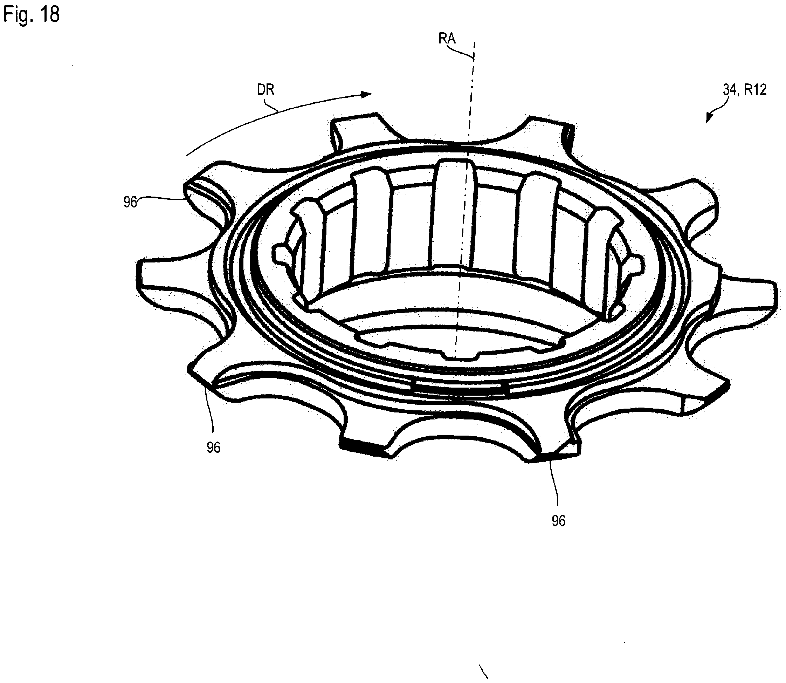

In Figur 18 ist das kleinste Ritzel R12 der Ritzelanordnung 30 perspektivisch von schräg außen betrachtet dargestellt. Da die Kette 28 dann, wenn sie im Eingriff mit dem kleinsten Ritzel R12 ist, einen besonders starken Schräglauf bezüglich der oben genannten zur Ritzeldrehachse RA orthogonalen Längsmittelebene des Fahrrads 10 aufweist, weisen die am kleinsten Ritzel R12 ausgebildeten axial dickeren Zähne 96a eine andere Gestalt auf als die an den übrigen Ritzeln (mit Ausnahme des Ritzels R7) ausgebildeten axial dickeren Zähne.

Zum einen ist am kleinsten Ritzel R12 die Abmessung in Umfangsrichtung der zum nächstgrößeren Ritzel bzw. zum größten Ritzel R1 hinweisenden seitlichen Zahnflanke größer als die Abmessung in Umfangsrichtung der vom größten Ritzel R1 wegweisenden seitlichen Zahnflanke. Letztere ist die dem Betrachter von Figur 18 zugewandte seitliche Zahnflanke.

Zum anderen überragt die vom Betrachter der Figur 18 abgewandte seitliche Zahnflanke die dem Betrachter von Figur 18 zugewandte seitliche Zahnflanke in Umfangsrichtung zu beiden Seiten. Der axial dickere Zahn 96 des kleinsten Ritzel R12 weist somit einen grob T-förmigen Umfangsquerschnitt auf.

## Patentansprüche

1. Fahrrad-Hinterrad-Ritzelanordnung (30), welche um eine gemeinsame, eine axiale Richtung sowie orthogonal hierzu radiale Richtungen definierende Ritzeldrehachse (RA) drehbar ist, umfassend eine Mehrzahl von koaxial bezüglich der Ritzeldrehachse (RA) angeordneten, zur gemeinsamen Drehung um die Ritzeldrehachse (RA) miteinander verbundenen Ritzeln (R1-R12) unterschiedlicher Größe und Zähneanzahl, wobei die Ritzelanordnung (30) eine erste Teilanordnung (32), umfassend das größte Ritzel (R1), und eine zweite Teilanordnung (34), umfassend eine Mehrzahl von einstückig miteinander ausgebildeten Ritzeln (R3-R12), aufweist,
wobei die zweite Teilanordnung (34) eine Reihe von zwischen 6 und 12 axial aufeinanderfolgenden Ritzeln (R3-R12) einstückig miteinander ausgebildet aufweist,
wobei für wenigstens eine Paarung, vorzugsweise für jede Paarung, aus einem Ritzel und dem ihm benachbarten nächstkleineren Ritzel der zweiten Teilanordnung (34) gilt, dass das Ritzel mit dem nächstkleineren Ritzel durch einstückig mit beiden Ritzeln ausgebildete Stege (54) verbunden ist, wobei die Anzahl an die beiden Ritzel verbindenden Stegen (54) kleiner ist als die Anzahl an Zähnen des kleineren Ritzels der Paarung,
und in einer Paarung aus zwei axial unmittelbar benachbarten, einstückig miteinander verbundenen Ritzeln jeder Steg (54) an derselben Umfangsposition am kleineren Ritzel der Paarung angeordnet ist wie ein Zahn des kleineren Ritzels, **dadurch gekennzeichnet, dass**
für die wenigstens eine Paarung wenigstens in einem Umfangsbereich gilt, dass an derselben Umfangsposition wie Stege (54) gelegene Zähne (56a) des nächstkleineren Ritzels axial dicker ausgebildet sind als die diesen in Umfangsrichtung unmittelbar benachbarten Zähne (56b).

2. Fahrrad-Hinterrad-Ritzelanordnung (30) nach Anspruch 1, wobei die zweite Teilanordnung (34) das kleinste Ritzel (R12) aufweist.

3. Fahrrad-Hinterrad-Ritzelanordnung (30) nach Anspruch 2, wobei die Anzahl an Stegen und die Anzahl an Zähnen des kleineren Ritzels einer Paarung von axial unmittelbar benachbarten und durch die Stege verbundenen Ritzeln einen gemeinsamen ganzzahligen Teiler aufweisen.

4. Fahrrad-Hinterrad-Ritzelanordnung (30) nach einem der Ansprüche 1 bis 3, wobei dann, wenn das nächstkleinere Ritzel eine gerade Zähneanzahl aufweist, die Anzahl an Stegen der Paarung genau halb so groß ist wie die gerade Zähneanzahl des nächstkleineren Ritzels.

5. Fahrrad-Hinterrad-Ritzelanordnung (30) nach Anspruch 4, wobei bei Betrachtung der zweiten Teilanordnung (34) in axialer Richtung für wenigstens eine Paarung, vorzugsweise für jede Paarung, aus einem Ritzel und dem ihm benachbarten nächstkleineren Ritzel mit gerader Zähneanzahl der zweiten Teilanordnung (34) gilt, dass jeder Steg (54) und jeder zweite Zahn (56a) des nächstkleineren Ritzels an derselben Umfangsposition gelegen sind.

6. Fahrrad-Hinterrad-Ritzelanordnung (30) nach einem der vorhergehenden Ansprüche, wobei sie acht bis vierzehn Ritzel (R1-R12) aufweist, wobei das kleinste Ritzel (R12) nicht mehr als zwölf, vorzugsweise nicht mehr als zehn, vorzugsweise genau zehn Zähne aufweist oder/und dass das größte Ritzel (R1) nicht weniger als 50, vorzugsweise nicht weniger als 52, besonders bevorzugt genau 52 Zähne aufweist.

7. Fahrrad-Hinterrad-Ritzelanordnung (30) nach einem der vorhergehenden Ansprüche, wobei an einer Mehrzahl von Ritzeln (R1-R6, R8-R12) mit gerader Zähneanzahl, vorzugsweise an allen Ritzeln (R1-R6, R8-R12) mit gerader Zähneanzahl, zumindest in einem Umfangsbereich jeweils in Umfangsrichtung alternierend ein axial dickerer Zahn (36a, 46a, 56a) und ein axial dünnerer Zahn (36b, 46b, 56b) aufeinander folgend angeordnet sind.

8. Fahrrad-Hinterrad-Ritzelanordnung (30) nach einem der vorhergehenden Ansprüche, wobei das kleinste Ritzel wenigstens in einem Umfangsbereich, vorzugsweise längs des gesamten Umfangs, in Umfangsrichtung abwechselnd axial dickere und axial dünnere Zähne aufweist, wobei zum nächstgrößeren Ritzel hinweisende seitliche Zahnflanken sowohl von axial dickeren als auch von axial dünneren Zähnen in dem Umfangsbereich auf einer gemeinsamen virtuellen Hüllfläche gelegen sind, wobei sich die axial dickeren Zähne ausgehend von der gemeinsamen Hüllfläche axial weiter vom nächstgrößeren Ritzel weg erstrecken als die in Umfangsrichtung dazwischen angeordneten axial dünneren Zähne.

9. Fahrrad-Hinterrad-Ritzelanordnung (30) nach Anspruch 8, wobei für eine Mehrzahl von axial dickeren Zähnen, vorzugsweise für alle dickere Zähne des kleinsten Ritzels gilt, dass die dem nächstgrößeren Ritzel nächstgelegene seitliche Zahnflanke eine größere Abmessung in Umfangsrichtung aufweist als die entgegengesetzte, vom nächstgrößeren Ritzel wegweisende seitliche Zahnflanke desselben Zahns, wobei die zum nächstgrößeren Ritzel hinweisende seitliche Zahnflanke die vom nächstgrößeren Ritzel wegweisende seitliche Zahnflanke in Umfangsrichtung sowohl mit ihrem in Antriebsdrehrichtung vorauseilenden Längsende als auch mit ihrem nachlaufenden Längsende überragt.

10. Fahrrad-Hinterrad-Ritzelanordnung (30) nach Anspruch 9, wobei an wenigstens einem axial dickeren Zahn, vorzugsweise an einer Mehrzahl von axial dickeren Zähnen, besonders bevorzugt an allen axial dickeren Zähnen, der Übergang von der in Umfangsrichtung längeren Zahnflanke zur in Umfangsrichtung kürzeren Zahnflanke an wenigstens einem Längsende des Zahns, vorzugsweise an beiden Längsenden, gestuft, vorzugsweise in einer einzigen Stufe erfolgt.

11. Fahrrad-Antriebsbaugruppe (12) aus einer Fahrradkette (28) mit längs ihrer Kettenlängsrichtung alternierend durch Außen- und Innenlaschenpaarungen (28a, 28b) miteinander verbundenen Rollen und aus einer mit der Fahrradkette (28) in Antriebskraft übertragenden Formschlusseingriff bringbaren Fahrrad-Hinterrad-Ritzelanordnung (30) nach einem der vorhergehenden Ansprüche, wobei die Abmessung der axial dickeren Zähne (36a, 46a, 56a) in axialer Richtung größer ist als die lichte Weite zwischen den Innenlaschenpaarungen (28b), so dass die axial dickeren Zähne (36a, 46a, 56a) nur in einen von Außenlaschen begrenzten Zahneintrittsraum der Fahrradkette bestimmungsgemäß vollständig eintauchen können.

12. Fahrrad-Antriebsbaugruppe (12) nach Anspruch 11, wobei für wenigstens einen Teil der Ritzel (R2-R6, R8-R12), insbesondere mit gerader Zähneanzahl gilt, dass dann, wenn ein Ritzel (R2-R6, R8-R12), insbesondere mit gerader Zähneanzahl, mit der Fahrradkette (28) in Kraft übertragendem Formschlusseingriff steht, in axialer Richtung zum nächstgrößeren Ritzel (R1-R5, R7-R1 1) hin einer Mehrzahl von Außenlaschen, vorzugsweise allen Außenlaschen, eines mit dem Ritzel (R2-R6, R8-R12) in Formschlusseingriff stehenden Kettenlängsabschnitts ein Steg (54) oder eine Ritzel-Speiche (40) axial gegenüber liegt.

## Claims

1. Bicycle rear wheel pinion arrangement (30) which is rotatable about a common pinion rotation axis (RA) defining an axial direction and radial directions orthogonal thereto, comprising a plurality of pinions (R1-R12) of different size and number of teeth arranged coaxially with respect to the pinion rotation axis (RA) and connected to one another for joint rotation about the pinion rotation axis (RA), wherein the pinion arrangement (30) has a first partial arrangement (32) comprising the largest pinion (R1), and a second partial arrangement (34) comprising a plurality of pinions (R3-R12) formed integrally with one another, wherein the second partial arrangement (34) has a row of between 6 and 12 axially consecutive pinions (R3-R12) formed integrally with one another,
wherein for at least one pairing, preferably for each pairing, consisting of a pinion and the next smaller pinion, which is adjacent thereto, of the second partial arrangement (34), the pinion with the next smaller pinion is connected by webs (54) formed integrally with the two pinions, wherein the number of webs (54) connecting the two pinions is smaller than the number of teeth of the smaller pinion of the pairing,
and in a pairing consisting of two pinions which are axially directly adjacent and are connected integrally to each other, each web (54) is arranged at the same circumferential position on the smaller pinion of the pairing as a tooth of the smaller pinion, **characterized in that**
for the at least one pairing, at least in a circumferential region, teeth (56a) of the next smaller pinion that are placed at the same circumferential position as webs (54) are of axially thicker design than the teeth (56b) directly adjacent to said teeth in the circumferential direction.

2. Bicycle rear wheel pinion arrangement (30) according to Claim 1, wherein the second partial arrangement (34) has the smallest pinion (R12).

3. Bicycle rear wheel pinion arrangement (30) according to Claim 2, wherein the number of webs and the number of teeth of the smaller pinion of a pairing of pinions which are axially directly adjacent and are connected by the webs have a common integer factor.

4. Bicycle rear wheel pinion arrangement (30) according to one of Claims 1 to 3, wherein whenever the next smaller pinion has an even number of teeth, the number of webs of the pairing is precisely half as much as the even number of teeth of the next smaller pinion.

5. Bicycle rear wheel pinion arrangement (30) according to Claim 4, wherein, when viewing the second partial arrangement (34) in the axial direction, for at least one pairing, preferably for each pairing, consisting of a pinion and the next smaller pinion which is adjacent thereto with an even number of teeth of the second partial arrangement (34), each web (54) and every second tooth (56a) of the next smaller pinion are placed at the same circumferential position.

6. Bicycle rear wheel pinion arrangement (30) according to one of the preceding claims, wherein it has eight to fourteen pinions (R1-R12), wherein the smallest pinion (R12) has no more than twelve, preferably no more than ten, preferably precisely ten teeth or/and in that the largest pinion (R1) does not have fewer than 50, preferably not fewer than 52, particularly preferably precisely 52 teeth.

7. Bicycle rear wheel pinion arrangement (30) according to one of the preceding claims, wherein, on a plurality of pinions (R1-R6, R8-R12) having an even number of teeth, preferably on all of the pinions (R1-R6, R8-R12) having an even number of teeth, an axially thicker tooth (36a, 46a, 56a) and an axially thinner tooth (36b, 46b, 56b) are arranged consecutively alternating in each case in the circumferential direction at least in a circumferential region.

8. Bicycle rear wheel pinion arrangement (30) according to one of the preceding claims, wherein the smallest pinion has axially thicker and axially thinner teeth alternating in the circumferential direction, at least in a circumferential region, preferably along the entire circumference, wherein lateral tooth flanks, facing the next larger pinion, both of axially thicker and of axially thinner teeth are placed in the circumferential region on a common virtual enveloping surface, wherein the axially thicker teeth starting from the common enveloping surface extend axially further away from the next larger pinion than the axially thinner teeth arranged in between in the circumferential direction.

9. Bicycle rear wheel pinion arrangement (30) according to Claim 8, wherein for a plurality of axially thicker teeth, preferably for all of the thicker teeth of the smallest pinion, the lateral tooth flank placed closest to the next larger pinion has a larger size in the circumferential direction than the opposite lateral tooth flank of the same tooth, said tooth flank facing away from the next larger pinion, wherein the lateral tooth flank facing the next larger pinion protrudes over the lateral tooth flank facing away from the next larger pinion in the circumferential direction both with its longitudinal end preceding in the driving direction of rotation and with its trailing longitudinal end.

10. Bicycle rear wheel pinion arrangement (30) according to Claim 9, wherein, at at least one axially thicker tooth, preferably at a plurality of axially thicker teeth, particularly preferably at all of the axially thicker teeth, the transition from the longer tooth flank in the circumferential direction to the shorter tooth flank in the circumferential direction is stepped, preferably in a single step, at at least one longitudinal end of the tooth, preferably at both longitudinal ends.

11. Bicycle drive assembly (12) consisting of a bicycle chain (28) having rollers connected to one another in an alternating manner along their chain longitudinal direction by outer and inner link plate pairings (28a, 28b) and of a bicycle rear wheel pinion arrangement (30), which can be brought into driving-force-transmitting positive-locking engagement with the bicycle chain (28), according to one of the preceding claims, wherein the size of the axially thicker teeth (36a, 46a, 56a) in the axial direction is greater than the clear width between the inner link plate pairings (28b), and therefore the axially thicker teeth (36a, 46a, 56a) can completely enter as specified only into a tooth entry space, which is bounded by outer link plates, of the bicycle chain.

12. Bicycle drive assembly (12) according to Claim 11, wherein for at least some of the pinions (R2-R6, R8-R12), in particular having an even number of teeth, whenever a pinion (R2-R6, R8-12), in particular having an even number of teeth, is in force-transmitting positive-locking engagement with the bicycle chain (28), a web (54) or a pinion spoke (40) lies axially opposite in the axial direction toward the next larger pinion (R1-R5, R7-R11) of a plurality of outer link plates, preferably of all of the outer link plates, of a chain longitudinal portion in positive-locking engagement with the pinion (R2-R6, R8-R12).

## Revendications

1. Ensemble de pignons de roue arrière de bicyclette (30) qui peut tourner autour d'un axe de rotation de pignon (RA) commun définissant une direction axiale ainsi que des directions radiales orthogonales à celle-ci, comprenant une pluralité de pignons (R1 à R12) de différentes tailles et d'un nombre de dents différent, disposés coaxialement par rapport à l'axe de rotation de pignon (RA) et reliés les uns aux autres pour une rotation commune autour de l'axe de rotation de pignon (RA), l'ensemble de pignons (30) présentant un premier sous-ensemble (32) comprenant le plus grand pignon (R1) et un deuxième sous-ensemble (34) comprenant une pluralité de pignons (R3 à R12) réalisés d'un seul tenant les uns avec les autres,
le deuxième sous-ensemble (34) présentant une série d'entre 6 et 12 pignons (R3 à R12) axialement consécutifs, réalisés d'un seul tenant les uns avec les autres,
pour au moins un appariement, de préférence pour chaque appariement, d'un pignon et du pignon plus petit suivant adjacent à celui-ci du deuxième sous-ensemble (34), il s'applique que le pignon est relié au pignon plus petit suivant par des entretoises (54) réalisées d'un seul tenant avec les deux pignons, le nombre d'entretoises (54) reliant les deux pignons étant inférieur au nombre de dents du pignon plus petit de l'appariement,
et dans un appariement de deux pignons immédiatement adjacents axialement et reliés d'un seul tenant l'un à l'autre, chaque entretoise (54) étant disposée à la même position circonférentielle au niveau de pignon plus petit de l'appariement qu'une dent du pignon plus petit, **caractérisé en ce que**
pour ledit au moins appariement, au moins dans une zone circonférentielle, il s'applique que des dents (56a) du pignon plus petit suivant situées à la même position circonférentielle que les entretoises (54) sont réalisées de manière axialement plus épaisse que les dents (56b) directement adjacentes à celles-ci dans la direction circonférentielle.

2. Ensemble de pignons de roue arrière de bicyclette (30) selon la revendication 1, le deuxième sous-ensemble (34) présentant le plus petit pignon (R12).

3. Ensemble de pignons de roue arrière de bicyclette (30) selon la revendication 2, le nombre d'entretoises et le nombre de dents du plus petit pignon d'un appariement de pignons immédiatement adjacents axialement et reliés par les biais des entretoises présentant un diviseur commun entier.

4. Ensemble de pignons de roue arrière de bicyclette (30) selon l'une des revendications 1 à 3, le nombre d'entretoises de l'appariement étant exactement la moitié du nombre de dents pair du pignon plus petit suivant lorsque le pignon plus petit suivant présente un nombre de dents pair.

5. Ensemble de pignons de roue arrière de bicyclette (30) selon la revendication 4, dans lequel lorsque l'on considère le deuxième sous-ensemble (34) dans la direction axiale, pour au moins un appariement, de préférence pour chaque appariement, d'un pignon et du pignon plus petit suivant, adjacent à celui-ci, doté d'un nombre de dents pair, du deuxième sous-ensemble (34), il s'applique que chaque entretoise (54) et une dent sur deux (56a) du pignon plus petit suivant sont situées à la même position circonférentielle.

6. Ensemble de pignons de roue arrière de bicyclette (30) selon l'une des revendications précédentes, celui-ci présentant de huit à quatorze pignons (R1 à R12), le plus petit pignon (R12) ne présentant pas plus de douze, de préférence pas plus de dix, de préférence exactement dix dents, ou/et le plus grand pignon (R1) ne présentant pas moins de 50, de préférence pas moins de 52, de manière particulièrement préférée exactement 52 dents.

7. Ensemble de pignons de roue arrière de bicyclette (30) selon l'une des revendications précédentes, dans lequel sur une pluralité de pignons (R1 à R6, R8 à R12) ayant un nombre de dents pair, de préférence sur tous les pignons (R1 à R6, R8 à R12) ayant un nombre de dents pair, au moins dans une zone circonférentielle, respectivement en alternance dans la direction circonférentielle, une dent axialement plus épaisse (36a, 46a, 56a) et une dent axialement moins épaisse (36b, 46b, 56b) sont disposées l'une après l'autre.

8. Ensemble de pignons de roue arrière de bicyclette (30) selon l'une des revendications précédentes, dans lequel le plus petit pignon présente au moins dans une zone circonférentielle, de préférence le long de toute la circonférence, en alternance dans la direction circonférentielle, des dents axialement plus épaisses et axialement moins épaisses, dans lequel des flancs de dent latéraux, tournés vers le pignon plus grand suivant, aussi bien de dents axialement plus épaisses que de dents axialement moins épaisses, sont situés dans la zone circonférentielle sur une surface enveloppante virtuelle commune, dans lequel les dents axialement plus épaisses s'étendent en partant de la surface enveloppante commune axialement plus loin du pignon plus grand suivant que les dents axialement moins épaisses intercalées dans la direction circonférentielle.

9. Ensemble de pignons de roue arrière de bicyclette (30) selon la revendication 8, dans lequel pour une pluralité de dents axialement plus épaisses, de préférence pour toutes les dents plus épaisses du plus petit pignon, il s'applique que le flanc de dent latéral le plus proche du pignon plus grand suivant présente une dimension supérieure dans la direction circonférentielle que le flanc de dent latéral opposé, détourné du pignon plus grand suivant, de la même dent, dans lequel le flanc de dent latéral, tourné vers le pignon plus grand suivant, dépasse le flanc de dent latéral, détourné du pignon plus grand suivant, dans la direction circonférentielle aussi bien par son extrémité longitudinale avant dans la direction de rotation d'entraînement que par son extrémité longitudinale arrière.

10. Ensemble de pignons de roue arrière de bicyclette (30) selon la revendication 9, dans lequel sur au moins une dent axialement plus épaisse, de préférence sur une pluralité de dents axialement plus épaisses, de manière particulièrement préférée sur toutes les dents axialement plus épaisses, la transition du flanc de dent plus long dans la direction circonférentielle au flanc de dent plus court dans la direction circonférentielle a lieu à au moins une extrémité longitudinale de la dent, de préférence aux deux extrémités longitudinales, de manière étagée, de préférence à un seul étage.

11. Module d'entraînement de bicyclette (12) composé d'une chaîne de bicyclette (28) avec des rouleaux reliés les uns aux autres en alternance le long de sa direction longitudinale de chaîne par des appariements de plaques extérieures et intérieures (28a, 28b) et d'un ensemble de pignons de roue arrière de bicyclette (30) selon l'une des revendications précédentes, pouvant être mis en prise par complémentarité de forme à transmission de force d'entraînement avec la chaîne de bicyclette (28), dans lequel la dimension des dents axialement plus épaisses (36a, 46a, 56a) dans la direction axiale est supérieure à la largeur libre entre les appariements de plaques intérieures (28b) de sorte que les dents axialement plus épaisses (36a, 46a, 56a) ne peuvent entrer complètement conformément à l'usage que dans un espace d'entrée de dent, limité par des plaques extérieures, de la chaîne de bicyclette.

12. Module d'entraînement de bicyclette (12) selon la revendication 11, dans lequel pour au moins une partie des pignons (R2 à R6, R8 à R12), en particulier ceux d'un nombre de dents pair, il s'applique que si un pignon (R2 à R6, R8 à R12), en particulier d'un nombre de dents pair, est en prise par complémentarité de forme à transmission de force avec la chaîne de bicyclette (28), dans la direction axiale vers le pignon plus grand suivant (R1 à R5, R7 à R11), une entretoise (54) ou un rayon de pignon (40) est opposé (e) axialement à une pluralité de plaques extérieures, de préférence à toutes les plaques extérieures, d'une partie longitudinale de chaîne en prise par complémentarité de forme avec le pignon (R2 à R6, R8 à R12).
